# EUROPEAN PATENT APPLICATION

(11) **EP 4 344 290 A1**
(43) Date of publication of application: **27.03.2024**
(21) Application number: 22804406.1
(22) Date of filing: 29.03.2022
(51) Int. Cl.: H04W 24/10, H04W 72/04

(54) **TERMINAL, WIRELESS COMMUNICATION METHOD, AND BASE STATION**

(30) Priority: 19.05.2021 JP 2021084588
(71) Applicant: NTT DOCOMO, INC., Tokyo 100-6150 (JP)
(72) Inventor: MATSUMURA, Yuki, Tokyo 100-6150 (JP); NAGATA, Satoshi, Tokyo 100-6150 (JP)
(74) Representative: Hoffmann Eitle
(86) International application number: PCT/JP2022/015535
(87) International publication number: WO 2022/244489

(57) **Abstract**

Perform appropriate CSI reporting/beam reporting for a non-serving cell. A terminal according to an aspect of the present disclosure includes: a control section that controls transmission of a first report not including information related to a measurement result of a non-serving cell and a second report including information related to a measurement result of the non-serving cell using uplink control information having a same size; and a transmission section that transmits at least one of the first report and the second report.

## Description

### Technical Field

The present disclosure relates to a terminal, a radio communication method, and a base station in next-generation mobile communication systems.

### Background Art

In a universal mobile telecommunications system (UMTS) network, specifications of long term evolution (LTE) have been drafted for the purpose of further increasing data rates, providing low latency, and the like (Non Patent Literature 1). Furthermore, the specifications of LTE-Advanced (3GPP Rel. 10 to 14) have been drafted for the purpose of further increasing capacity and advancement of LTE (third generation partnership project (3GPP) release (Rel.) 8 and 9).

Successor systems to LTE (for example, also referred to as 5th generation mobile communication system (5G), 5G+(plus), 6th generation mobile communication system (6G), New Radio (NR), or 3GPP Rel. 15 and subsequent releases) are also being studied.

### Citation List

### Non Patent Literature

Non Patent Literature 1: 3GPP TS 36.300 V8.12.0 "Evolved Universal Terrestrial Radio Access (E-UTRA) and Evolved Universal Terrestrial Radio Access Network (E-UTRAN); Overall description; Stage 2 (Release 8)", April, 2010.

### Summary of Invention

### Technical Problem

Layer 1/layer 2 (L1/L2) inter-cell mobility that facilitates more efficient DL/UL beam management (that achieves lower latency and overhead) is being considered in future radio communication systems.

In the L1/L2 inter-cell mobility, a serving cell change can be performed using a function such as beam control without reconfiguring radio resource control (RRC). In other words, transmission and reception with a non-serving cell can be performed without handover. Since a data communication unavailable period occurs such that RRC re-connection is required for handover, L1/L2 inter-cell mobility, which does not require handover, is preferable.

However, in the New Radio (NR) specifications so far, channel state information (CSI) reporting/beam reporting for a reference signal (alternatively, a measurement result) of a non-serving cell has not been sufficiently studied. Therefore, there is a possibility that appropriate CSI reporting/beam reporting cannot be performed for the non-serving cell.

Therefore, an object of the present disclosure is to provide a terminal, a radio communication method, and a base station capable of performing appropriate CSI reporting/beam reporting for a non-serving cell.

### Solution to Problem

A terminal according to an aspect of the present disclosure includes: a control section that controls transmission of a first report not including information related to a measurement result of a non-serving cell and a second report including information related to a measurement result of the non-serving cell using uplink control information having a same size; and a transmission section that transmits at least one of the first report and the second report.

### Advantageous Effects of Invention

According to an aspect of the present disclosure, appropriate CSI reporting/beam reporting can be performed for a non-serving cell.

### Brief Description of Drawings

[FIG. 1] Fig. 1 is a diagram illustrating an outline of a CSI report configuration of RRC.
[FIG. 2] Fig. 2A is a diagram illustrating a part of the CSI resource configuration of RRC. Fig. 2B is a diagram illustrating a part of a CSI-SSB resource set.
[FIG. 3] Figs. 3A and 3B are diagrams illustrating an example of inter-cell mobility.
[FIG. 4] Fig. 4 is a diagram illustrating an example of a flowchart of a UE operation in a first embodiment.
[FIG. 5] Figs. 5A and 5B are diagrams illustrating an example of contents of beam reporting/CSI reporting in the first embodiment.
[FIG. 6] Fig. 6 is a diagram illustrating an example of UCI in a second embodiment.
[FIG. 7] Figs. 7A and 7B are diagrams illustrating an example of contents of beam reporting/CSI reporting in the second embodiment.
[FIG. 8] Figs. 8A and 8B are diagrams illustrating another example of the contents of the beam reporting/CSI reporting in the second embodiment.
[FIG. 9] Figs. 9A and 9B are diagrams illustrating another example of the contents of the beam reporting/CSI reporting in the second embodiment.
[FIG. 10] Figs. 10A and 10B are diagrams illustrating another example of the contents of the beam reporting/CSI reporting in the second embodiment.
[FIG. 11] Figs. 11A and 11B are diagrams illustrating an example of contents of beam reporting/CSI reporting in a fourth embodiment.
[FIG. 12] Fig. 12 is a diagram illustrating an example of a schematic configuration of a radio communication system according to one embodiment.
[FIG. 13] Fig. 13 is a diagram illustrating an example of a configuration of a base station according to one embodiment.
[FIG. 14] Fig. 14 is a diagram illustrating an example of a configuration of a user terminal according to one embodiment.
[FIG. 15] Fig. 15 is a diagram illustrating an example of a hardware configuration of the base station and the user terminal according to one embodiment.

### Description of Embodiments

### (CSI Reporting)

In the NR, UE measures a channel state using a certain reference signal (or a resource for the reference signal), and feeds back (reports) the channel state information (CSI) to a base station.

The UE may measure the channel state using a channel state information-reference signal (CSI-RS), a synchronization signal/physical broadcast channel (SS/PBCH) block, a synchronization signal (SS), a demodulation reference signal (DMRS) and the like.

The CSI-RS resource can include at least one of non zero power (NZP) CSI-RS and CSI-interference management (IM). The SS/PBCH block is a block including a synchronization signal (e.g., primary synchronization signal (PSS) and secondary synchronization signal (SSS)) and a PBCH (and the corresponding DMRS), which may be called an SS block (SSB) or the like. An SSB index may be given for a time position of an SSB in a half frame.

Note that the CSI can include at least one of channel quality indicator (CQI), precoding matrix indicator (PMI), a CSI-RS resource indicator (CRI), SS/PBCH block resource indicator (SSBRI), layer indicator (LI), rank indicator (RI), layer 1(L1)-reference signal received power (RSRP), L1-reference signal received quality (RSRQ), L1-signal to interference plus noise ratio (SINR), L1-signal to noise ratio (SNR), or the like.

The CSI can have multiple parts. The first part of CSI (CSI part 1) can include information with a relatively small number of bits (e.g., RI). The second part of CSI (CSI part 2) can include information having a relatively large number of bits (e.g., CQI) such as information determined on the basis of the CSI part 1.

As a CSI feedback method, (1) periodic CSI (P-CSI) reporting, (2) aperiodic CSI (A(AP)-CSI) reporting, (3) semi-permanent (semi-persistent) CSI (SP-CSI) reporting, and the like have been studied.

The UE may be notified of information related to the CSI reporting (which may be referred to as CSI report configuration information) by using higher layer signaling, physical layer signaling (for example, downlink control information (DCI)), or a combination thereof. The CSI report configuration information may be configured by using, for example, an RRC information element "CSI-ReportConFig."

Here, the higher layer signaling may be, for example, any of radio resource control (RRC) signaling, medium access control (MAC) signaling, broadcast information, and so on, or a combination thereof.

For example, a MAC control element (MAC CE), a MAC protocol data unit (MAC PDU), or the like may be used for the MAC signaling. The broadcast information may be, for example, a master information block (MIB), a system information block (SIB), remaining minimum system information (RMSI), other system information (OSI), and the like.

The CSI report configuration information can include, in one example, information relating to a report period, an offset, or the like, which can be represented by a certain time unit (such as units of slot, units of subframe, and units of symbol). The CSI report configuration information may include a configuration ID (CSI-ReportConfigId). Parameters such as a type of a CSI reporting method (SP-CSI or not, and the like) and a reporting cycle may be specified by the configuration ID. The CSI report configuration information may include information (CSI-ResourceConfigId) indicating which signal (or a resource for which signal) is used to report the measured CSI.

### (Beam Management)

In Rel-15 NR, a beam management (BM) method has been studied so far. In the beam management, it has been studied to perform beam selection on the basis of the L1-RSRP reported by the UE. Changing (switching) the beam of a signal/channel may correspond to changing the (Transmission Configuration Indication state) of the signal/channel.

Note that the beam selected by the beam selection may be a transmission beam (Tx beam) or a reception beam (Rx beam). Furthermore, the beam selected by the beam selection may be a UE beam or a base station beam.

The UE may report (transmit) the measurement result for beam management using a PUCCH or PUSCH. The measurement result may be, for example, CSI including at least one of the L1-RSRP, L1-RSRQ, L1-SINR, L1-SNR, and the like. Furthermore, the measurement result may be referred to as a beam measurement, a beam measurement result, beam reporting, a beam measurement report, or the like.

The CSI measurement for beam reporting may include interference measurement. The UE may measure channel quality, interference, and the like by using a resource for CSI measurement, and derive beam reporting. The resource for CSI measurement may be, for example, at least one of an SS/PBCH block resource, a CSI-RS resource, another reference signal resource, or the like. The configuration information of the CSI measurement report may be configured in the UE using higher layer signaling.

The beam reporting may include a result of at least one of channel quality measurement and interference measurement. The result of the channel quality measurement may include, for example, the L1-RSRP. The result of the interference measurement may include the L1-SINR, L1-SNR, L1-RSRQ, and other indicators regarding interference (for example, any indicator other than the L1-RSRP).

Note that, the resource for CSI measurement for beam management may be referred to as a resource for beam measurement. Furthermore, the signal/channel as the CSI measurement target may be referred to as a signal for beam measurement. Furthermore, CSI measurement/reporting may be replaced with at least one of measurement/report for beam management, beam measurement/reporting, radio link quality measurement/report, or the like.

The CSI report configuration information considering the current beam management of NR is included in the RRC information element "CSI-ReportConfig". Information in the RRC information element "CSI-ReportConfig" will be described.

The CSI report configuration information (CSI-ReportConfig) may include report quantity information (may be represented by a "report quantity" and an RRC parameter "reportQuantity".) that is information of parameters to be reported. The report quantity information is defined by a type of an ASN.1 object called "choice". Therefore, one of the parameters (cri-RSRP, ssb-Index-RSRP, and the like) defined as the report quantity information is configured.

The UE in which the higher layer parameter (for example, the RRC parameter "groupBasedBeamReporting") included in the CSI report configuration information is configured to enabled may include a plurality of beam measurement resource IDs (for example, SSBRI, CRI) and a plurality of measurement results (for example, L1-RSRP) corresponding thereto in the beam reporting for each report configuration.

The UE in which one or more numbers of RS resources to be reported are configured by a higher layer parameter (for example, the RRC parameter "nrofReportedRS") included in the CSI report configuration information may include, for each report configuration, one or more beam measurement resource IDs and one or more measurement results (for example, L1-RSRP) corresponding thereto in the beam reporting.

### (TCI, Spatial Relation, and QCL)

In NR, it has been studied to control reception processing (e.g., at least one of reception, demapping, demodulation, and decoding) and transmission processing (e.g., at least one of transmission, mapping, precoding, modulation, and coding) in UE of at least one of a signal and a channel (expressed as a signal/channel) based on a transmission configuration indication state (TCI state).

The TCI state may represent that applied to downlink signals/channels. The TCI state applied to an uplink signal/channel may be expressed as a spatial relation.

The TCI state is information regarding a quasi-co-location (QCL) of the signal/channel, and may also be referred to as a spatial Rx parameter, spatial relation information, or the like. The TCI state may be configured in the UE for each channel or each signal.

The QCL is an index indicating a statistical property of a signal/channel. For example, a case where one signal/channel and another signal/channel have a QCL relation may mean that it is possible to assume that at least one of Doppler shift, Doppler spread, an average delay, a delay spread, and a spatial parameter (e.g., a spatial Rx parameter) is identical (in QCL with respect to at least one of these) between the plurality of different signals/channels.

Note that, the spatial Rx parameter may correspond to a reception beam of the UE (for example, a reception analog beam), and the beam may be specified on the basis of spatial QCL. The QCL (or at least one element of QCL) in the present disclosure may be replaced with the spatial QCL (sQCL).

A plurality of types (QCL types) of QCL may be defined. For example, four QCL types A to D may be provided that differ in parameters (or parameter sets) that can be assumed to be identical, and the parameters (which may also be referred to as QCL parameters) are shown below:
- QCL type A (QCL-A): Doppler shift, Doppler spread, average delay and delay spread;
- QCL type B (QCL-B): Doppler shift and Doppler spread;
- QCL type C (QCL-C): Doppler shift and average delay; and
- QCL type D (QCL-D): spatial reception parameter.

The UE assuming that a certain control resource set (Control Resource Set (CORESET)), channel, or reference signal has a specific QCL (for example, QCL type D) relation with another CORESET, channel, or reference signal may be referred to as QCL assumption.

The UE may determine at least one of a transmission beam (Tx beam) and a reception beam (Rx beam) of a signal/channel based on a TCI state of the signal/channel or the QCL assumption.

The TCI state may be, for example, information regarding the QCL of a target channel (in other words, a reference signal (RS) for the channel) and another signal (e.g., another RS). The TCI state may be configured (indicated) by higher layer signaling, physical layer signaling, or a combination thereof.

In the present disclosure, the higher layer signaling may be any of, for example, radio resource control (RRC) signaling, medium access control (MAC) signaling, broadcast information, and the like, or a combination thereof.

For example, a MAC control element (MAC CE), a MAC protocol data unit (PDU), or the like may be used for the MAC signaling. The broadcast information may be, for example, a master information block (MIB), a system information block (SIB), remaining minimum system information (RMSI), other system information (OSI), or the like.

The physical layer signaling may be, for example, downlink control information (DCI).

A channel for which a TCI state or spatial relation is configured (specified) may be, for example, at least one of a physical downlink shared channel (PDSCH), a physical downlink control channel (PDCCH), a physical uplink shared channel (PUSCH), or a physical uplink control channel (PUCCH) .

Furthermore, an RS having a QCL relation with the channel may be, for example, at least one of a synchronization signal block (SSB), a channel state information reference signal (CSI-RS)), a measurement reference signal (sounding reference signal (SRS)), a tracking CSI-RS (also referred to as a tracking reference signal (TRS)), and a QCL detection reference signal (also referred to as a QRS).

The SSB is a signal block including at least one of a primary synchronization signal (PSS), a secondary synchronization signal (SSS), or a physical broadcast channel (PBCH). The SSB may be referred to as an SS/PBCH block.

The information element ("TCI-state IE" of RRC) of the TCI state configured by the higher layer signaling may include one or more pieces of QCL information (one or more QCL information, "QCL-Info"). The QCL information may include at least one of information (RS relation information) regarding RS having a QCL relation and information (QCL type information) indicating a QCL type. The RS related information may include information such as an index of the RS (e.g., an SSB index or a non-zero-power (NZP) CSI-RS resource identifier (ID)), an index of a cell where the RS is located, or an index of a bandwidth part (BWP) where the RS is located.

In NR Rel. 15, both an RS of QCL type A and an RS of QCL type D, or only the RS of QCL type A may be configured for the UE as a TCI state of at least one of the PDCCH or the PDSCH.

In a case where the TRS is configured as the RS of QCL type A, the TRS is different from the demodulation reference signal (demodulation reference signal (DMRS)) of the PDCCH or the PDSCH, and it is assumed that the same TRS is periodically transmitted for a long time. The UE may measure the TRS and calculate an average delay, a delay spread, and the like.

In the UE for which the TRS is configured as the RS of QCL type A in the TCI state of the DMRS of the PDCCH or the PDSCH, it can be assumed that parameters (the average delay, the delay spread, and the like) of QCL type A are the same between the DMRS of the PDCCH or the PDSCH and the TRS, and thus, the parameters (the average delay, the delay spread, and the like) of type A of the DMRS of the PDCCH or the PDSCH can be obtained from a measurement result of the TRS. When performing channel estimation of at least one of the PDCCH and the PDSCH, the UE can perform channel estimation with higher accuracy using the measurement result of the TRS.

The UE for which the RS of QCL type D is configured can determine a UE reception beam (spatial domain reception filter, UE spatial domain reception filter) by using the RS of QCL type D.

An RS of QCL type X in a TCI state may mean an RS in a QCL type X relation with (DMRS of) a certain channel/signal, and this RS may be referred to as a QCL source of QCL type X in the TCI state.

### (L1 Beam Reporting)

L1 beam reporting is used during beam selection. In the current L1-RSRP reporting specification (Rel. 15/16), the number (nrofReportedRS) of reported RSs (beam, L1-RSRP) is 1, 2, or 4. The reported maximum L1-RSRP value is defined by a 7-bit value in a range of [-140, -44] dBm (step size 1 dB). Furthermore, when a difference L1-RSRP is used, the maximum measured value of the L1-RSRP is quantized to a 7-bit value within a range of [-140, -44] dBm (step size is 1 dB), and a 4-bit value is quantized as the difference L1-RSRP. The difference L1-RSRP is a difference between the measurement value of L1-RSRP and the maximum value (strongest RSRP).

The UE may report a reference signal index (alternatively, a beam index) and a measurement result (for example, at least one of L1-RSRP, L1-RSRQ, L1-SINR, L1-SNR, etc.) as the beam reporting.

### (CSI Report Configuration and CSI Resource Configuration of RRC)

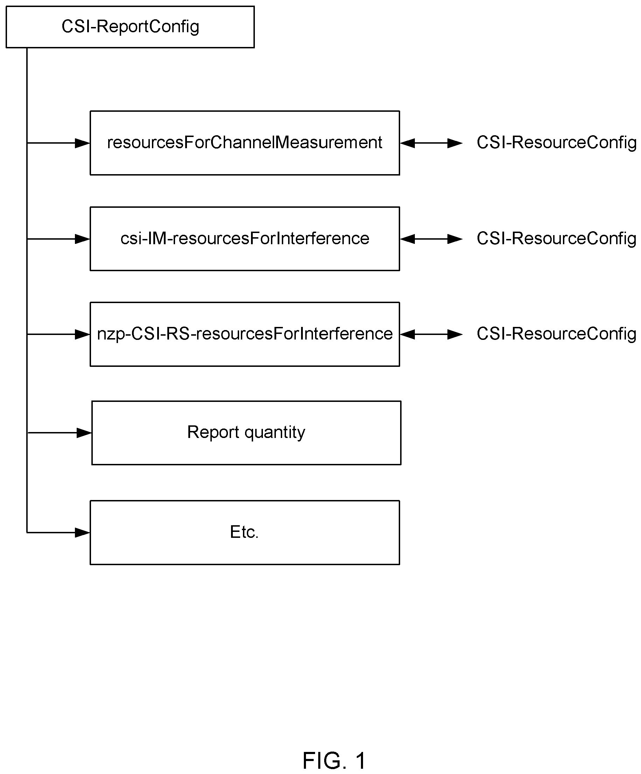

Fig. 1 is a diagram illustrating an outline of a CSI report configuration of RRC. Fig. 1 illustrates the CSI reporting configuration of RRC in 3GPP Rel. 15/16. As illustrated in Fig. 1, the CSI report configuration (CSI-ReportConfig) includes, for example, resource information for channel measurement (resourcesForChannelMeasurement), CSI-IM resource information for interference measurement (csi-IM-resourcesForInterference), NZP-CSI-RS resource information for interference measurement (nzp-CSI-RS-resourcesForInterference), a report quantity (Report quantity), and the like. The "resourcesForChannelMeasurement", "csi-IM-resourcesForInterference", and "nzp-CSI-RS-resourcesForInterference" include CSI resource configuration (CSI-ResourceConfigId) .

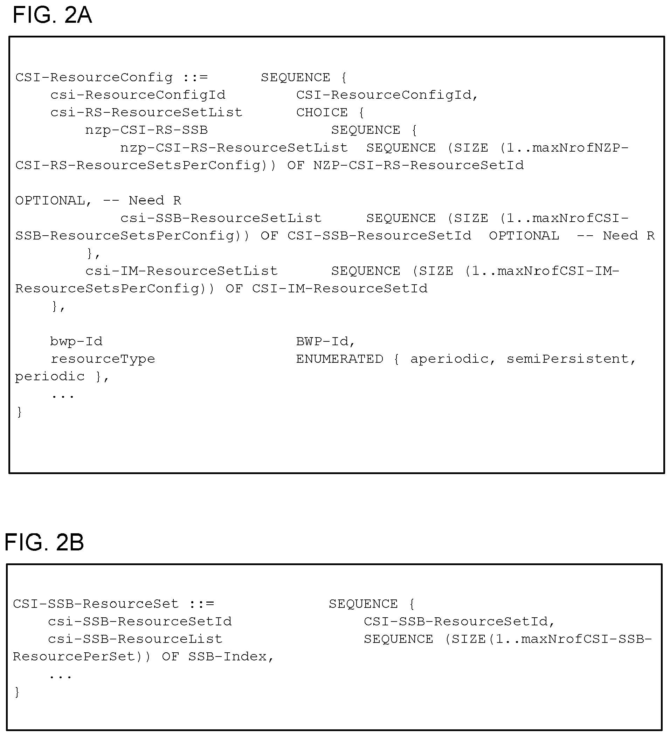

Fig. 2A is a diagram illustrating a part of RRC CSI resource configuration. Fig. 2B is a diagram illustrating a part of a CSI-SSB resource set. Figs. 2A and 2B illustrate an RRC configuration of 3GPP Rel. 15/16. As illustrated in Fig. 2A, the CSI resource configuration (CSI-ResourceConfig) includes a CSI-SSB resource set ID (CSI-SSB-ResourceSetId). As illustrated in Fig. 2B, CSI-SSB-resource set (CSI-SSB-ResourceSet) includes the CSI-SSB resource set ID (CSI-SSB-ResourceSetId) and an SSB index (SSB-Index).

### (Inter-cell Mobility)

Meanwhile, in NR, it is considered that one or a plurality of transmission/reception points (TRPs) (multi-TRPs (MTRPs)) perform DL transmission to the UE. Furthermore, it is also considered that the UE performs UL transmission to one or a plurality of TRPs.

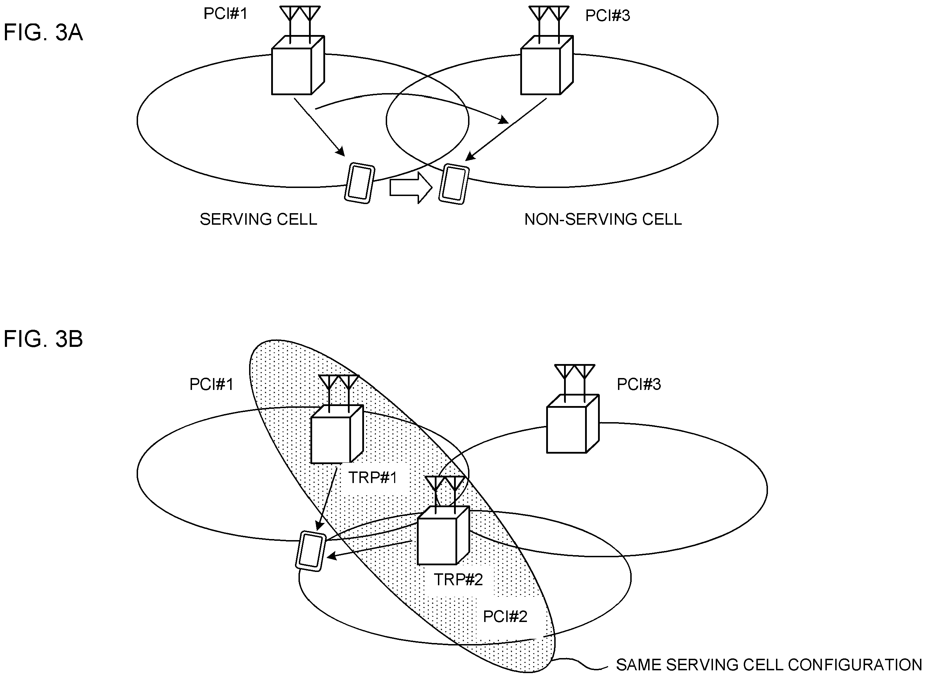

The UE may receive channels/signals from a plurality of cells/TRPs in inter-cell mobility (for example, L1/L2 inter cell mobility) (See Figs. 3A and 3B).

Fig. 3A illustrates an example of inter-cell mobility (for example, inter-cell mobility of a single TRP) including a non-serving cell. The single TRP may mean a case in which only one TRP among the multi-TRPs performs transmission to the UE (which may be referred to as a single mode). A CORESET pool index may indicate a single TRP. Here, a case where the UE receives the channel/signal from a base station/TRP of a cell #1 that is a serving cell and a base station/TRP of a cell #3 that is not the serving cell (a non-serving cell) is illustrated. For example, this corresponds to a case where the UE switches from the cell #1 to the cell #3 (for example, fast cell switch).

In this case, the TCI state may be updated by the DCI/MAC CE, and the selection of the port (for example, an antenna port)/TRP/point may be performed dynamically. Different physical cell IDs (for example, PCI) are set for the cell # 1 and the cell # 3.

Fig. 3B illustrates an example of a multi-TRP scenario (for example, inter-cell mobility (Multi-TRP inter-cell mobility) in a case where multi-TRPs are used). Here, a case where the UE receives a channel/signal from TRP#1 and TRP2 is illustrated. Here, a case where TRP#1 exists in the cell #1 (PCI#1) and TRP#2 exists in a cell #2 (PCI#2) is illustrated.

The multi-TRPs (TRP#1 and TRP#2) may be connected by an ideal/non-ideal backhaul, and information, data, and the like may be exchanged. A different codeword (CW) and a different layer may be transmitted from each TRP of the multi-TRPs. As a form of multi-TRP transmission, non-coherent joint transmission (NCJT) may be used as illustrated in Fig. 3B. Here, a case where NCJT is performed between a plurality of cells (for example, different PCI cells) is illustrated. Note that the same serving cell configuration may be applied/configured to the TRP#1 and the TRP#2.

In the NCJT, for example, the TRP#1 performs modulation mapping and layer mapping on a first codeword, performs first precoding in a first number of layers (for example, two layers), and transmits first signal/channel (for example, PDSCH). Furthermore, the TRP#2 performs modulation mapping and layer mapping on a second codeword, performs second precoding in a second number of layers (for example, two layers), and transmits the second signal/channel (for example, PDSCH).

A plurality of PDSCHs (multi-PDSCHs) subjected to the NCJT may be defined as partially or completely overlapping with respect to at least one of time and frequency domains. That is, the first PDSCH from the TRP#1 and the second PDSCH of the TRP#2 may overlap at least one of time resources or frequency resources.

The first PDSCH and the second PDSCH may be assumed not to be in quasi-co-located (QCL) relation. Reception of the multi-PDSCHs may be replaced with simultaneous reception of PDSCHs that are not of a certain QCL type (for example, QCL type D.

The plurality of PDSCHs from the mult-TRPs (which may also be called to as multiple PDSCH) may be scheduled using one DCI (single DCI (S-DCI), single PDCCH) (single master mode). One piece of DCI may be transmitted from one TRP of the multi-TRPs. A configuration utilizing one DCI in the multi-TRPs may be referred to as a single DCI-based multi-TRPs (mTRP/MTRP) .

A case (which may be referred to as a master slave mode) in which each of the multi-TRPs transmits a part of a control signal to the UE and the multi-TRPs transmit a data signal may be applied.

The plurality of PDSCHs from the multi-TRPs may be each scheduled using a plurality of pieces of DCI (a plurality of DCI, mult-DCI (M-DCI), multi-PDCCHs (multiple PDCCHs)) (multi-master mode). The plurality of pieces of DCI (the plurality of DCI) may be respectively transmitted from the multi-TRPs. A configuration using a plurality of DCIs in the multi-TRPs may be referred to as multi-DCI-based multi-TRPs (mTRP/MTRP).

It may be assumed that the UE sends, to different TRPs, different CSI reporting (CSI reports) for the respective TRPs. Such CSI feedback may be referred to as separate feedback, separate CSI feedback, or the like. In the present disclosure, "separate" may be read interchangeably with "independent".

For inter-cell mobility using the multi-TRPs, use of a mechanism of the TCI state of Rel. 15/16 has been studied, and use of a new mechanism for inter-cell mobility using the single TRP has been studied. In the mechanism of the TCI state of Rel. 15/16, the CSI-RS can be configured as the TCI state of the PDSCH/PDCCH (DMRS of the PDSCH/PDCCH) (the TCI state of the PDSCH/PDCCH refers to the CSI-RS.). Furthermore, SSB can be configured as the TCI state of the CSI-RS. However, it was not possible to directly configure the SSB as the TCI state of the PDSCH/PDCCH. In a new mechanism (inter-cell mobility of the single TRP) of Rel. 17 using a unified TCI state, it is considered to (directly) configure the SSB as the TCI state of the PDSCH/PDCCH.

Note that configuring X as the TCI state of the PDSCH/DCCH, referring to X as the TCI state of the PDSCH/PDCCH, and having X as the QCL source of the PDSCH/PDCCH may be read interchangeably.

The inter-cell mobility (L1/L2 inter-cell mobility) as described above that facilitates more efficient DL/UL beam management (that achieves lower latency and overhead) is being considered in future radio communication systems.

In the L1/L2 inter-cell mobility, a serving cell can be changed using a function such as beam control without reconfiguring RRC. In other words, transmission and reception with a non-serving cell can be performed without handover. Since a data communication unavailable period occurs such that RRC re-connection is required for handover, L1/L2 inter-cell mobility, which does not require handover, is preferable.

For L1/L2-centric inter-cell mobility, at least one of the following methods 1 and 2 may be supported for L1/L2-centric reporting of neighboring cells.

Method 1: A base station (gNB) may trigger CSI reporting of a neighboring cell (for example, a non-serving cell). The base station (gNB) may have PCI and MeasObject configured for CSI reporting/CMR set/CMR resources. The CMR may be a CSI-RS/SSB for mobility derived according to MeasObject and PCI.

Method 2: A beam-level event triggering mechanism for L1/L2-centric inter-cell mobility may be applied. After being initialized by an event triggered by the mobility measurement, L1-RSRP reporting including a new candidate beam and neighboring cell information (such as PCI) may be performed on the MAC-CE.

To save resources and power consumption of periodic CSI reporting, it is preferable to support event-triggered cell reporting/beam reporting/CSI reporting when the best SSB (RSRP) of a more suitable non-serving cell candidate is sufficiently better than a serving cell. Note that the reporting may include the candidate SSB/cell ID. The UE may request a UL grant for reporting by reusing a normal SR resource or a dedicated SR resource. For example, reporting of information (for example, SSB L1-RSRP) regarding a measurement result from the non-serving cell candidate by the event trigger may be supported.

However, when the reporting of the information related to the measurement result of the non-serving cell candidate is supported, how to control the reporting of the information related to the measurement result of the non-serving cell candidate becomes a problem. In a case where the information regarding the measurement result of the non-serving cell candidate is not appropriately reported, there is a possibility that the throughput decreases or the communication quality deteriorates.

The present inventors have studied reporting control of information related to the measurement result of the non-serving cell candidate and conceived the present embodiment.

Hereinafter, embodiments according to the present disclosure will be described in detail with reference to the drawings. A radio communication method according to each embodiment may be applied independently, or may be applied in combination with others.

In the present disclosure, the CSI reporting, the beam reporting, and the L1 beam reporting may be read interchangeably. The reporting and the measurement may be read interchangeably.

In the present disclosure, a panel, an uplink (UL) transmission entity, a point, a TRP, a spatial relation, a control resource set (COntrol REsource SET (CORESET)), a PDSCH, a codeword, a base station, an antenna port (for example, a demodulation reference signal (DMRS) port) of a signal, an antenna port group (for example, a DMRS port group) of a signal, a group for multiplexing (for example, a code division multiplexing (CDM) group, a reference signal group, and a CORESET group), a CORESET pool, a CORESET subset, a CW, a redundancy version (RV), and a layer (MIMO layer, transmission layer, and spatial layer) may be read interchangeably. Furthermore, the panel identifier (ID) and the panel may be read interchangeably. In the present disclosure, a TRP index, a TRP ID, a CORESET pool index, an ordinal number (first and second) of a TCI state in two TCI states, and a TRP may be read interchangeably.

In the present disclosure, a beam, a spatial domain filter, a spatial setting, a TCI state, a UL TCI state, a unified TCI state, a unified beam, a common TCI state, a common beam, a TCI assumption, a QCL assumption, a QCL parameter, a spatial domain receive filter, a UE spatial domain receive filter, a UE receive beam, a DL beam, a DL reception beam, a DL precoding, a DL precoder, a DL-RS, an RS of QCL type D of a TCI state/QCL assumption, an RS of QCL type A of a TCI state/QCL assumption, a spatial relation, a spatial domain transmission filter, a UE spatial domain transmission filter, a UE transmission beam, a UL beam, a UL transmission beam, a UL precoding, a UL precoder, and a PL-RS may be read interchangeably. In the present disclosure, a QCL type X-RS, a DL-RS associated with a QCL type X, a DL-RS with the QCL type X, a source of the DL-RS, an SSB, a CSI-RS, and an SRS may be read interchangeably.

In the present disclosure, a single TRP, a channel using a single TRP, a channel using one TCI state/spatial relation, not activating mult-TRPs by RRC/DCI, not activating a plurality of TCI states/spatial relations by RRC/DCI, and not configuring one CORESET pool index (CORESETPoolIndex) value for any CORESET and not mapping any code point in a TCI field to two TCI states may be read interchangeably.

In the present disclosure, multi-TRPs, a channel using multi-TRPs, a channel using a plurality of TCI states/spatial relations, activating multi-TRPs by RRC/DCI, activating a plurality of TCI states/spatial relations by RRC/DCI, and at least one of multi-TRPs based on single DCI and multi-TRPs based on multi-DCI may be read interchangeably.

In the present disclosure, a cell, CC, a carrier, a BWP, and a band may be read as interchangeable with each other.

In the present disclosure, an index, an ID, an indicator, and a resource ID may be read as interchangeable with each other.

In the present disclosure, "A/B" may be read as "at least one of A and B", and "A/B/C" may be read as "at least one of A, B, and C".

In the present disclosure, an RS, a beam, a measurement result, and a configuration of the RS may be read interchangeably. The RS may mean at least one of the CRI and the SSBRI in the CSI reporting. The L1-RSRP and the L1-SINR may be read interchangeably. An SSB, an SSB index, and an SSBRI may be read interchangeably.

### (Radio Communication Method)

When a certain condition is satisfied, reporting of information related to a measurement result of the non-serving cell may be supported. For example, in a case where the certain condition is satisfied, the UE may perform control to report the information regarding the measurement result of the non-serving cell (Alternatively, reporting may be allowed.). On the other hand, when the certain condition is not satisfied, the UE may have a configuration in which the reporting of the information regarding the measurement result of the non-serving cell is not supported (That is, the information regarding a measurement result of the serving cell is reported.).

The case where the certain condition is satisfied may be, for example, a case where a certain event is triggered/occurs. For example, the UE may determine, based on a measurement result related to channel state information (CSI) of at least one of a serving cell, a neighboring cell, a primary cell, a primary secondary cell, and a secondary cell, whether an event triggering CSI reporting/beam reporting occurs.

When the event occurs (or when the event is triggered), the UE may transmit CSI reporting (for example, aperiodic CSI reporting)/beam reporting including information related to a measurement result of the non-serving cell. A condition of the event may be the same as the condition of the event that triggers RRM reporting, or at least one part thereof may be different. Alternatively, the event may occur on the basis of a measurement result of reference signal received power (L1-RSRP) in the layer 1.

When a plurality of events (for example, an RRM reporting event or a new event) are supported, reporting of information regarding a measurement result of the non-serving cell may be supported when all or some of the plurality of events are triggered.

The UE may perform control to transmit the CSI reporting/beam reporting using at least one of the DCI and the medium access control control element (MAC CE) when the event occurs.

### <First Embodiment>

The UE may transmit a first report (when the certain condition is not satisfied) including no measurement result (for example, beam reporting/CSI reporting on a non-serving cell) of the non-serving cell and a second report (when the certain condition is satisfied) including the measurement result of the non-serving cell using uplink control information (UCI). In such a case, the UE may perform control so that a bit size of first UCI used for transmission of the first report (or including the first report) and a bit size of second UCI used for transmission of the second report (or including the second report) are the same.

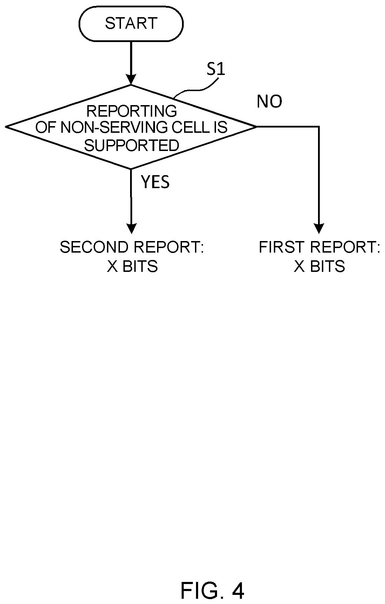

The UE may determine whether or not to include the non-serving cell or the information (for example, beam information/reference signal resource information) related to a measurement result associated with the cell ID (PCI) of the non-serving cell in the beam reporting/CSI reporting on the basis of a certain condition (see Fig. 4). The UE determines whether or not reporting of the non-serving cell is supported (S1). The UE may determine and determine whether or not to support the reporting of the non-serving cell based on whether or not a certain condition (for example, a certain event) occurs.

For example, when determining that a certain event occurs (YES in S1), the UE may perform the second report that is allowed to include a measurement result of the non-serving cell using the second UCI. When determining that the certain event does not occur (NO in S1), the UE may perform the first report including a measurement result of the serving cell (not including the measurement result of the non-serving cell) by using the first UCI.

Fig. 4 illustrates a case where the UCI having the same size (here, X bits) is used in each of a case where the UE does not perform the beam reporting of the non-serving cell (performs the first report) and a case where the UE performs the beam reporting of the non-serving cell (performs the second report). That is, bit sizes (alternatively, payloads, sizes, and bit numbers) of the first UCI including the first report and the second UCI including the second report are the same.

In this way, regardless of whether the UE triggers beam reporting/CSI reporting of a non-serving cell (or whether an event is triggered/occurs), the bit sizes of the first UCI and the second UCI may be controlled to be the same.

As described above, by performing the measurement result (for example, an L1 beam report) of the serving cell/non-serving cell using the UCI, it is possible to suppress a delay of the report and to suppress an increase in overhead of the UL resource as compared with a case of the report using the MAC CE.

Furthermore, by making the bit size of the first UCI used for the first report and the bit size of the second UCI used for the second report the same, recognition of the UCI size can be made common between the UE and NW (for example, a base station). This can eliminate a need to perform blind detection (UCI blind detection) when the base station receives the first UCI/the second UCI transmitted from a terminal.

The first UCI/the second UCI may be at least one of periodic CSI reporting/beam reporting, aperiodic CSI reporting/beam reporting, and semi-persistent CSI reporting/beam reporting.

The UE may control the bit sizes of the first UCI and the second UCI to be the same when a certain higher layer parameter is set/when the UE reports certain UE capability information.

Note that, in the present embodiment, the first UCI including the first report and the second UCI including the second report may be transmitted using at least one of the uplink shared channel (PUSCH) and the uplink control channel (PUCCH).

### <Aspect 1-1>

The bit sizes of the UCI used for beam reporting when the certain event occurs and the UCI used for beam reporting when the certain event does not occur may be the same. When no event occurs, the UE may control to always perform CSI reporting/beam reporting on the serving cell (not to perform CSI reporting/beam reporting on the non-serving cell). When an event occurs, the UE may control to perform CSI reporting/beam reporting of at least one of the serving cell and the non-serving cell.

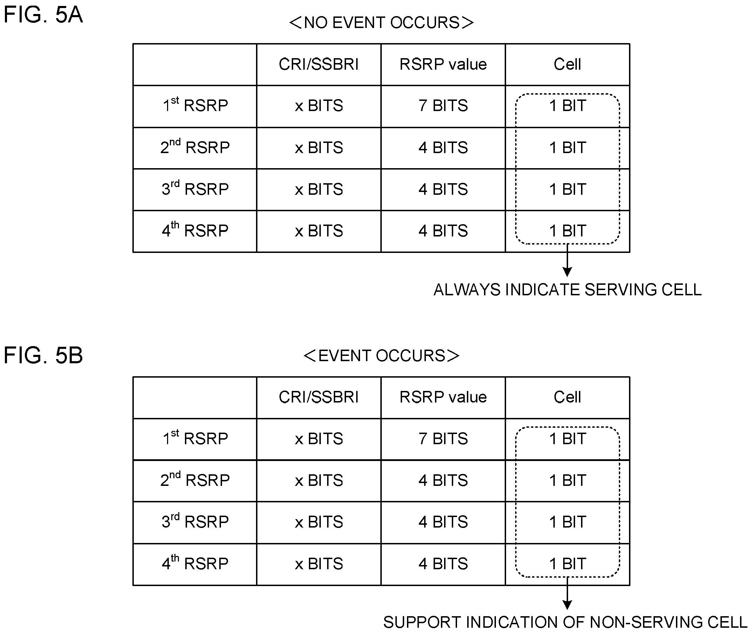

Fig. 5A illustrates an example of contents of the CSI reporting/beam reporting (first report) when no event occurs, and Fig. 5B illustrates an example of contents of the CSI reporting/beam reporting (second report) when an event occurs. Here, a case where the number of reports (for example, the number of reference signals/the number of reference signal resources to be reported) is four is illustrated, but the number of reports is not limited thereto.

A bit size of each field included in the first report and a bit size of each field included in the second report (or bit sizes of each field included in the first UCI/the second UCI) may be set to be the same.

In Fig. 5A, a cell notification field (for example, Cell field/Serving Cell field) designating a cell corresponding to each measurement result (for example, 1st RSRP to 4th RSRP) is set, but the cell notification field may always indicate a serving cell.

In Fig. 5B, although the cell notification field corresponding to each measurement result (for example, 1st RSRP to 4th RSRP) is set, either the serving cell or the non-serving cell may be indicated by the cell notification field.

In Figs. 5A and 5B, the cell notification field is 1 bit, but may be 2 bits or more. In this case, in Fig. 5B, information (for example, the non-serving cell ID) of the non-serving cell may be indicated using a plurality of bits.

### <Aspect 1-2>

When receiving the same (one) CSI report configuration/CSI resource configuration including both the configuration of the serving cell's RS (for example, SSB) and the configuration of the non-serving cell's RS (for example, SSB), the UE may control transmission of the CSI reporting/beam reporting including information indicating the serving cell/non-serving cell (for example, an indicator) in addition to the conventional report contents. The information is information indicating association between the reference signal/measurement result and the serving cell or the non-serving cell, and may be, for example, an indicator indicated in Options 1-1 and 1-2, an extended beam index indicated in Option 1-3, or the like. The report contents may be, for example, at least one of the SSB index, the CRI, the L1-RSRP, the L1-SINR, the L1-SNR, the LI, the RI, the PMI, and the CQI. Examples shown in the following options may be applied as a method of setting this information.

### [Option 1-1]

A 1-bit indicator indicating a serving cell/non-serving cell may be applied. For example, "0" may indicate a serving cell, and "1" may indicate a non-serving cell. Furthermore, "1" may indicate a serving cell, and "0" may indicate a non-serving cell.

### [Option 1-2]

A new ID (for example, a re-created (re-indexed, re-numbered) index indicating the non-serving cell, a group ID of the CMR) or PCI (PCI used directly) may be applied as the information indicating the serving cell/non-serving cell. This new ID may be dependent on RS configuration signaling (CSI reporting configuration/CSI resource configuration). In this new ID, for example, "0" may indicate the serving cell, "1" may indicate the non-serving cell #1, and "2" may indicate the non-serving cell #2. That is, the new ID may indicate either the serving cell or one or more non-serving cells.

The re-created index indicating the non-serving cell may be associated with a portion of the PCI. By using the re-created index instead of the PCI, the number of information bits is reduced, and the overhead of the RRC signaling can be reduced. The re-created index may be referred to as a re-creation index.

In Option 1-1 and Option 1-2, the UE may additionally report for each beam index (both serving cell RS and non-serving cell RS). Alternatively, the UE may additionally report only the RS corresponding to the non-serving cell.

### [Option 1-3]

An extended beam index (RS index, SSB index, CSI-RS resource index, reporting beam index, reporting RS index) according to the re-created index of the non-serving cell RS may be applied as the information indicating the serving cell/non-serving cell. In this case, there may be no additional report contents. In the present disclosure, the SSB index and the SSBRI may be read interchangeably.

As the extended beam index, the non-serving cell RS may be first re-numbered (re-indexed) according to (an order of) the non-serving cell PCI/index/group ID, and then the non-serving cell RS may be re-numbered according to (an order of) the RS index (SSB index, CSI-RS resource index). For example, SSBs #0-63 for a serving cell and SSBs #64-127 for a non-serving cell may be renumbered as extended beam indexes from the SSB indexes 0-63 (which may be used for reporting).

When two non-serving cells' RSs are configured, SSBs #0, 4, and 5 are transmitted from the non-serving cell #1, and SSBs # 2, 4, 10, and 12 are transmitted from the non-serving cell #2. Then, the reported SSB indexes #64, 65, and 66 may indicate SSBs # 0, 4, and 5 corresponding to the non-serving cell #1, and the reported SSB indexes #67, 68, 69, and 70 may indicate SSBs #2, 4, 10, and 12 corresponding to the non-serving cell #2.

The re-creation index of the non-serving cell SSB may start from a maximum number (for example, 4, 8, 64) of serving cell SSBs. The re-creation index of the non-serving cell SSB may be started subsequent to the maximum value of the serving cell SSB index (For example, when SSBs #0, 1, 5, 8, and 10 corresponding to the serving cell are configured, a reported non-serving cell SSB index starts from 11.).

The re-creation index of the non-serving cell SSB may be started subsequent to the maximum value of the re-creation index of the serving cell SSB (For example, when SSBs #0, 1, 5, 8, and 10 of the serving cell are configured, because SSB indexes #0, 1, 2, 3, and 4 of the serving cell are re-created and reported, a reported non-serving cell SSB index starts from 5.).

Each of the above options may apply only to SSB index reporting (not to CRI reporting), or may apply to both SSB index reporting and CRI reporting.

In the current L1-RSRP reporting specification (Rel. 15/16), a value of L1-RSRP is defined by a value of 7 bits in a range of [-140, -44] dBm (step size is 1 dB). Furthermore, when a difference L1-RSRP is used, the maximum measured value of the L1-RSRP is quantized to a 7-bit value within a range of [-140, -44] dBm (step size is 1 dB), and a 4-bit value is quantized as the difference L1-RSRP. The difference L1-RSRP is a difference between the measurement value of L1-RSRP and the maximum value (strongest RSRP).

Note that it is also conceivable that the specification of the future L1-RSRP reporting is changed as in the following (1-1) and (1-2).

(1-1) When beam reporting of a non-serving cell is configured in the UE in addition to beam reporting of a serving cell, a bit size for each beam reporting may maintain the number of bits (7 bits/4 bits) in the foregoing current specification, and the number of bits that is X times the number of bits in the foregoing current specification may be used as a total number of bits. X may be different depending on the number of non-serving cells supported (reported to be supported) by the UE or the number of non-serving cells configured for the UE.

(1-2) The number of bits (7-bit L1-RSRP, 4-bit difference L1-RSRP) of the above specification may be maintained. To support beam reporting of a non-serving cell, the best (maximum) L1-RSRP in both the serving cell and the non-serving cell may be reported by using 7 bits, and a difference L1-RSRP of each beam in both the serving cell and the non-serving cell may be reported by using 4 bits. This can reduce overhead, but may increase a quantization error due to supporting the beam reporting of a non-serving cell.

In the current specification, because the number of bits for beam reporting is defined to support up to 64 SSBs, if the number of SSBs is extended to support SSB indexes of 0 to 127, it is conceivable that a specification of the CRI/SSBRI is updated. For example, the number of bits for a beam/resource index (CRI/SSBRI) may be increased to support beam reporting of a non-serving cell. In that case, the following examples (2-1) and (2-2) can be considered as specifications of the future L1-RSRP reporting.

(2-1) The number of bits (7-bit L1-RSRP, 4-bit difference L1-RSRP) of the above specification may be maintained. That is, it means that the total number of bits for beam reporting increases to support non-serving cell beam reporting.

(2-2) When non-serving cell beam reporting is configured for the UE, the number of bits of the L1-RSRP value may be reduced. That is, fewer than 7 bits may be used for the L1-RSRP and fewer than 4 bits may be used for the difference L1-RSRP. In this case, since the total number of bits for the beam reporting is smaller than the above described 2-1, the overhead can be suppressed, but the quantization error may increase. The number of bits to be used may be specified in the specification or may be set in the UE by higher layer signaling or the like.

When (1-1) and (2-2) are applied, a table defining a report value of the L1-RSRP and the difference L1-RSRP in the specification may be updated.

### <Second Embodiment>

In a case where a report including information regarding a measurement result is included in the UCI and transmitted, the UE may include information regarding the presence or absence of occurrence of an event (alternatively, presence or absence of a trigger) in the UCI.

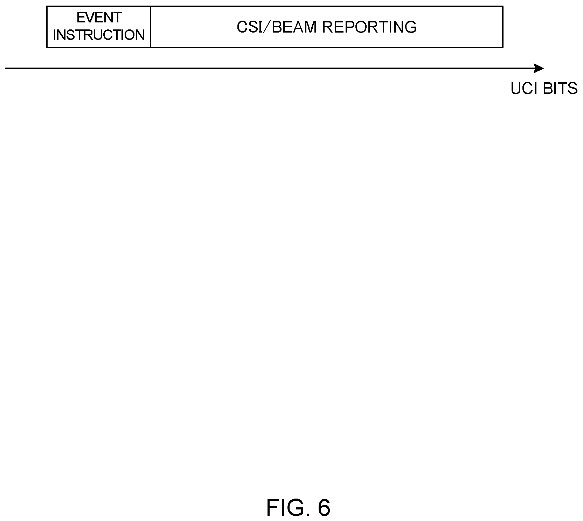

For example, in a case where a certain higher layer parameter is set, the UE may include information regarding whether or not an event occurs in the UCI that performs the CSI reporting/beam reporting. In this case, a field (for example, the event notification field) indicating the presence or absence of occurrence of an event may be set in the UCI (see Fig. 6).

The field for event notification is set with a certain bit (for example, 1 bit), and a first value (for example, "0") may indicate that no event occurs, and a second value (for example, "1") may indicate that an event occurs.

When an event occurs, it may be indicated that there is a possibility that information (for example, the beam information of the non-serving cell) related to the measurement result of the non-serving cell is included in the CSI reporting/beam reporting.

When no event occurs, it may be indicated that the measurement result of the non-serving cell is not included in the CSI reporting/beam reporting (For example, only information about the measurement result of the serving cell is included.).

The CSI reporting/beam reporting may be performed using a certain UCI size regardless of occurrence of an event. In other words, regardless of whether the information regarding the measurement result of the non-serving cell is included, the CSI reporting/beam reporting may be performed by using a certain UCI size.

As described above, by making the bit size of the first UCI used for the first report and the bit size of the second UCI used for the second report the same, recognition of the UCI size can be made common between the UE and the NW (for example, a base station). This can eliminate a need to perform blind detection (UCI blind detection) when the base station receives the first UCI/the second UCI transmitted from a terminal.

The priority (for example, a UCI priority rule) of the UCI including the event notification field may be set higher or lower than certain UCI (for example, beam reporting that does not include the field). Alternatively, the priority of the UCI including the event notification field may be set to a certain priority in the specification, or may be set by higher layer signaling.

### <Aspect 2-1>

In a case where the CSI reporting/beam reporting is performed using a certain UCI size regardless of whether or not an event occurs, the content/configuration included in a report (for example, a first report) in a case where the event does not occur and the content/configuration included in a report (for example, a second report) in a case where the event occurs may be set separately (for example, differently). The content/configuration included in the report may be, for example, a field/field size.

For example, the number of bits/bit size of the received power notification field indicating the reception power (for example, the RSRP value) included in the first report and the number of bits/bit size of the received power notification field included in the second report may be set differently. Alternatively, the number of bits/bit size of the cell notification field included in the first report and the number of bits/bit size of the cell notification field included in the second report may be set differently.

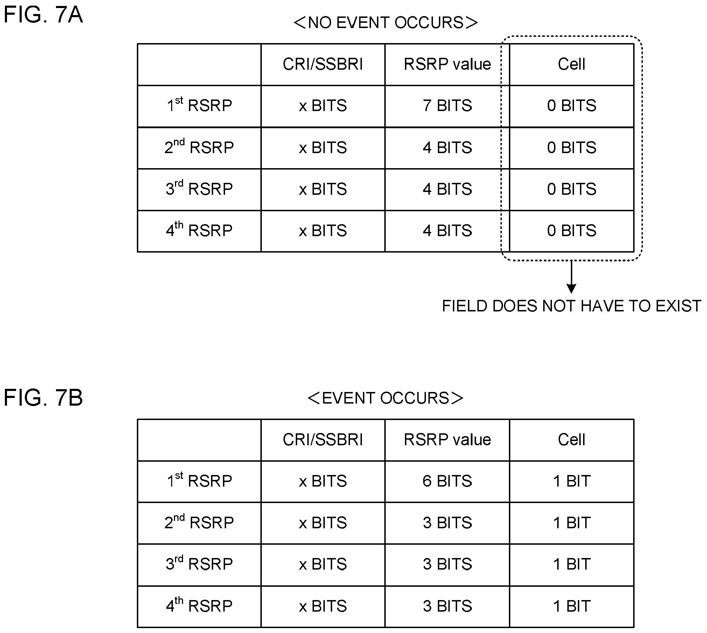

Fig. 7A illustrates an example of the content/configuration included in the first report when no event occurs, and Fig. 7B illustrates an example of the content/configuration included in the second report when an event occurs. Here, a case where the number of beam/reference signal resources (for example, nrofReportedRS) to perform reporting is four is illustrated, but the present disclosure is not limited thereto.

If no event occurs, there is no need to report a measurement result of the non-serving cell. Therefore, the cell notification field may not be included in the first report (for example, 0 bits) (see Fig. 7A).

When an event occurs, in addition to reporting a measurement result of a serving cell, reporting a measurement result of a non-serving cell may be supported. Therefore, a cell notification field for notifying the cell information (for example, whether it is a serving cell or a non-serving cell) in the second report may be added (see Fig. 7B).

Fig. 7B illustrates a case where the number of bits of the cell notification field is added and the number of bits of the received power notification field is reduced instead, as compared with Fig. 7A. In this case, in the specification (for example, the RAN4 specification), a table used in a case where an absolute value of the RSRP (for example, an absolute RSRP value) is notified in 6 bits and a table used in a case where a value of the difference RSRP (for example, a differential RSRP value) is notified in 3 bits may be newly defined.

Fig. 7B illustrates a case where the number of bits for the received power notification field is reduced along with the addition of the cell notification field, but the present disclosure is not limited thereto. The number of bits for other fields (for example, a reference signal resource (for example, CRI/SSBR) notification field) may be reduced instead of the received power notification field.

Furthermore, the number of bits/bit size of the cell notification field set in the second report when the event occurs is not limited to one, and may be two or more. In this case, the number of bits for the plurality of fields (for example, a field for CRI/SSBRI notification and a field for received power notification) may be reduced in the second report.

### <Aspect 2-2>

Information on the non-serving cell may be notified using a reference signal resource (for example, CRI/SSBRI) notification field.

For example, in a case where the CSI reporting/beam reporting is performed using a constant UCI size regardless of occurrence of an event, the bit size of each field included in the first report in a case where no event occurs and the bit size of each field included in the second report in a case where an event occurs may be set separately (for example, differently).

For example, the number of bits/bit size of the CRI/SSBRI notification field included in the first report and the number of bits/bit size of the CRI/SSBRI notification field included in the second report may be set differently. Alternatively, the number of bits/bit size of the received power notification field included in the first report and the number of bits/bit size of the received power notification field included in the second report may be set differently.

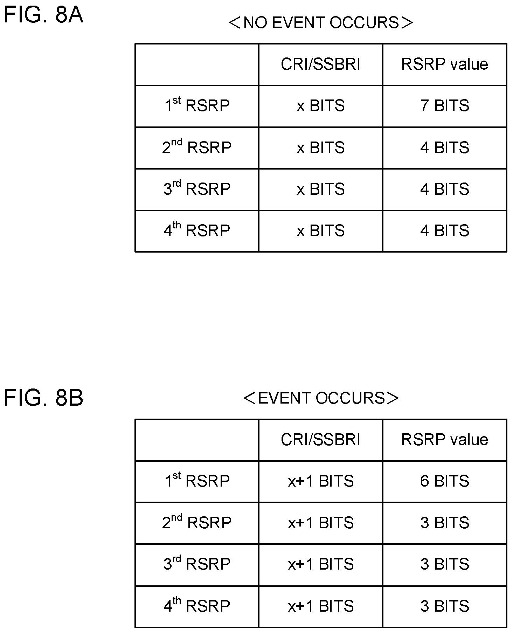

Fig. 8A illustrates an example of the content/configuration included in the first report when no event occurs, and Fig. 8B illustrates an example of the content/configuration included in the second report when an event occurs. Here, a case where the number of beam/reference signal resources (for example, nrofReportedRS) to perform reporting is four is illustrated, but the present disclosure is not limited thereto.

If no event occurs, there is no need to report a measurement result of the non-serving cell. In this case, for example, in the first report, the CRI/SSBRI notification field may be indicated by X bits, and the received power notification field may be indicated by a given value (for example, 7 bits/4 bits) (see Fig. 8A).

When an event occurs, in addition to reporting a measurement result of a serving cell, reporting a measurement result of a non-serving cell may be supported. In this case, for example, the cell information may be notified using a certain field (for example, a field for CRI/SSBRI notification) in the second report (see Fig. 8B). Specifically, the number of bits/bit size of a certain field may be extended, and the number of bits/bit size of other fields (for example, the received power notification field) may be reduced.

Fig. 8B illustrates a case where the number of bits for the CRI/SSBRI notification field is extended and the number of bits for the received power notification field is reduced instead as compared with Fig. 8A. In this case, in the specification (for example, the RAN4 specification), a table used in a case where an absolute value of the RSRP (for example, an absolute RSRP value) is notified in 6 bits and a table used in a case where a value of the difference RSRP (for example, a differential RSRP value) is notified in 3 bits may be newly defined.

In the second report, the UE may notify the cell information (for example, whether the cell is a serving cell or a non-serving cell) using a certain field (for example, a field for CRI/SSBRI notification).

Fig. 8B illustrates a case where the number of bits of the received power notification field is reduced, but the present disclosure is not limited thereto. The number of bits for other fields (for example, a field for CRI/SSBRI notification) may be reduced instead of the received power notification field. In this case, the cell information (for example, whether the cell is a serving cell or a non-serving cell) and the CRI/SSBRI information may be reported using x bits of the CRI/SSBRI notification field.

### <Aspect 2-3>

In a case where the CSI reporting/beam reporting is performed using a constant UCI size regardless of whether or not the event occurs, the number of bits/bit size of the CRI/SSBRI notification field included in the first report in a case where the event does not occur and the number of bits/bit size of the CRI/SSBRI notification field included in the second report in a case where the event occurs may be set differently.

Alternatively, the first report may not include the cell notification field, and the second report may include the cell notification field.

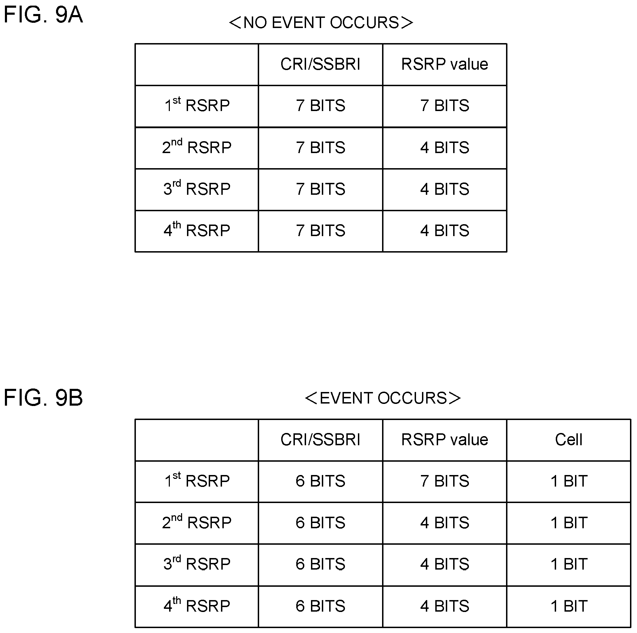

Fig. 9A illustrates an example of the content/configuration included in the first report when no event occurs, and Fig. 9B illustrates an example of the content/configuration included in the second report when an event occurs. Here, a case where the number of beam/reference signal resources (for example, nrofReportedRS) to perform reporting is four is illustrated, but the present disclosure is not limited thereto.

If no event occurs, there is no need to report a measurement result of the non-serving cell. Therefore, the cell notification field may not be included in the first report, and the CRI/SSBRI notification field may be set with 7 bits (see Fig. 9A). When the field for CRI/SSBRI notification is set with 7 bits, the UE may support notification of CRI (for example, 128 types)/SSBRI (for example, 64 types) in the first report.

When an event occurs, in addition to reporting a measurement result of a serving cell, reporting a measurement result of a non-serving cell may be supported. Therefore, a cell notification field for notifying the cell information (for example, whether it is a serving cell or a non-serving cell.) may be added in the second report (see Fig. 9B).

Fig. 9B illustrates a case where the cell notification field is added and the number of bits for the CRI/SSBRI notification field is reduced (from 7 bits to 6 bits) instead, as compared with Fig. 9A. In this case, the UE may perform control such that the notification of the SSBRI is performed without performing the notification of the CRI in the second report.

In this manner, when an event occurs (that is, when the reporting of the information on the non-serving cell is supported), notification of CRI may not be supported/allowed. In other words, when the reporting of the information about the non-serving cell is supported, the notification of the CRI is restricted even when the information about the serving cell is reported, and only the notification of the SSBRI may be supported.

### <Aspect 2-4>

When an event occurs, the UE may perform control to perform the reporting by including only the information of the non-serving cell (not including the information of the serving cell) in the CSI reporting/beam reporting (for example, the second report).

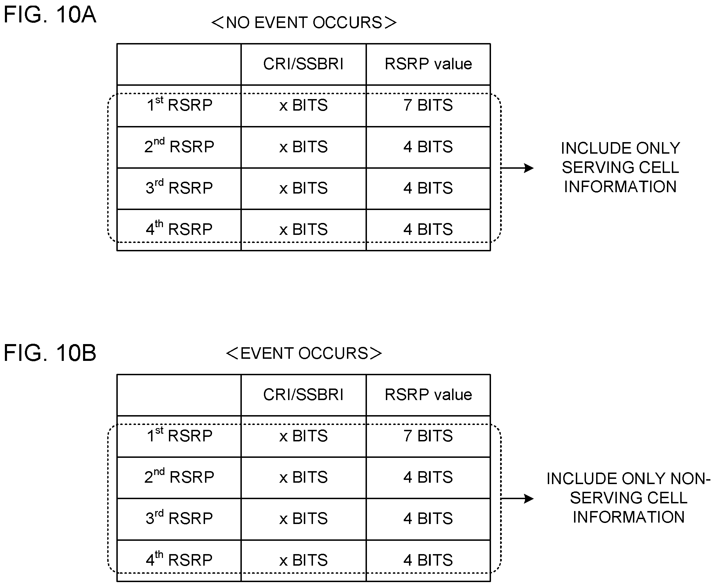

When no event occurs, the UE performs the first report including the measurement result of only the serving cell (not including the measurement result of the non-serving cell) (see Fig. 10A). On the other hand, the UE may perform the second report including the measurement result of only the non-serving cell (not including the measurement result of the serving cell) when the event occurs (see Fig. 10B).

As a result, the bit size of each field (for example, the field for CRI/SSBRI notification/the field for received power notification) included in the first report in a case where no event occurs and the bit size of each field included in the second report in a case where an event occurs can be set equal.

### <Third Embodiment>

When the reporting of the measurement result of the non-serving cell is supported (For example, a certain event occurs.), the CRI/CSI-RS may not be supported in the reporting (For example, only SSBRI/SSB is supported.).

The UE may control to perform reporting by using the SSBRI/SSB when reporting of a measurement result of the non-serving cell is supported. For example, when reporting the measurement result of the non-serving cell (for example, when a non-serving cell is included in the calculation of the L1-RSRP), the UE may select one from a certain maximum number (for example, 64) of SSBs as the notification of the SSBRI including the non-serving cell.

In this case, resources of a certain number (for example, up to 64) of SS/PBCH blocks associated with the non-serving cell may be configured in the UE. Furthermore, the SSBRI number supported in the reporting of the L1-RSRP including the non-serving cell may be a maximum of 6 bits.

In the UE, resources (alternatively, the SSBRI number of up to 6 bits) of a certain number (for example, up to 64) of SS/PBCH blocks may be configured for each non-serving cell. In this case, the association between the non-serving cell (or a non-serving cell index.) and the SSBRI/SSB may be notified from the UE to the base station using another field.

As described above, when the reporting of the measurement result of the non-serving cell is supported, SSBRI/SSB (for example, 64 types) may be used instead of CSIRI/CSI-RS (for example, 128 types) in the beam reporting/CSI reporting. As a result, the number of bits used for notification of the reference signal (or a reference signal resource) in the beam reporting/CSI reporting can be reduced.

### <Fourth Embodiment>

The UE may control to report at least one piece of information about the measurement result of the non-serving cell when the certain event occurs.

For example, the UE may determine that a certain measurement result (for example, 1st RSRP) included in the CSI reporting/beam reporting corresponds to the non-serving cell when an event occurs. The condition of the event may be a case where the maximum RSRP of the non-serving cell is higher than the maximum RSRP of the serving cell.

As described above, when at least the certain measurement result (for example, 1st RSRP) corresponds to the non-serving cell, the cell information (for example, whether it corresponds to serving cell or non-serving cell) may be notified.

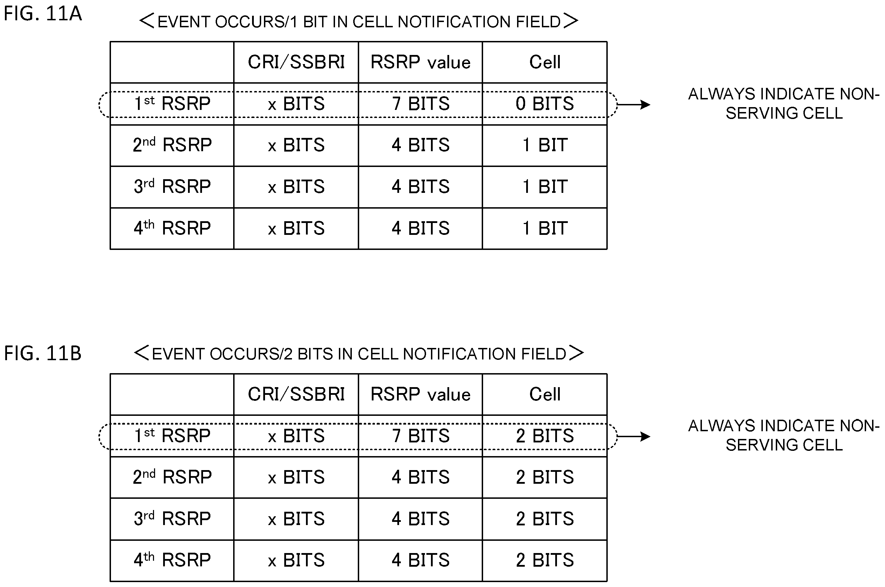

When the cell information is notified by 1 bit (alternatively, when the cell notification field is set to 1 bit), a certain measurement result (for example, 1st RSRP) may be configured such that the cell information is not notified (the cell information is 0 bits) (see Fig. 11A). Cell information may be notified of other measurement results (for example, 2nd RSRP to 4th RSRP). The base station may assume that the 1st RSRP corresponds to a non-serving cell.

When the cell information is notified by a plurality of bits (for example, 2 bits) (alternatively, when the cell notification field is set to 2 bits.), the cell information (for example, a non-serving cell index) may be notified as a certain measurement result (for example, 1st RSRP) (see Fig. 11B).

In Fig. 11B, when the number of non-serving cells to be set is one or two, it is possible to notify which index of the non-serving cell among the plurality of non-serving cells corresponds by using the cell information notification field (for example, at least one bit) corresponding to the 1st RSRP. Note that, in this case, the notification field of the cell information corresponding to the 1st RSRP may be reduced to 1 bit.

When the number of non-serving cells to be set is three or four, it is possible to notify which index of the non-serving cell among the plurality of non-serving cells corresponds by using the cell information notification field (for example, at least 2 bits) corresponding to the 1st RSRP.

The fourth embodiment may be applied to at least one of a case where CSI reporting/beam reporting is performed by using UCI and a case where CSI reporting/beam reporting is performed by using a MAC CE.

### <UE Capability Information>

In the first to fourth embodiments, the following UE capabilities may be configured. Note that the following UE capabilities may be read as a parameter (for example, higher layer parameters) configured from the network (for example, a base station) to the UE.

UE capability information may be defined regarding whether or not to support reporting to a non-serving cell (for example, L1-RSRP beam reporting).

UE capability information may be defined regarding whether or not to support event triggering of reporting to a non-serving cell (for example, L1-RSRP beam reporting).

UE capability information regarding whether or not to support application of the first embodiment may be defined.

UE capability information regarding whether or not to support application of the second embodiment may be defined.

UE capability information regarding whether or not to support application of the third embodiment may be defined.

UE capability information regarding whether or not to support application of the fourth embodiment may be defined.

At least one of the first to fourth embodiments may be configured to be applied to a UE that supports/reports at least one of the UE capabilities described above. Alternatively, at least one of the first to fourth embodiments may be configured to be applied to the UE configured by higher layer signaling from a network.

### (Radio Communication System)

Hereinafter, a configuration of a radio communication system according to one embodiment of the present disclosure will be described. In this radio communication system, communication is performed using any one of the radio communication methods according to the embodiments of the present disclosure or a combination thereof.

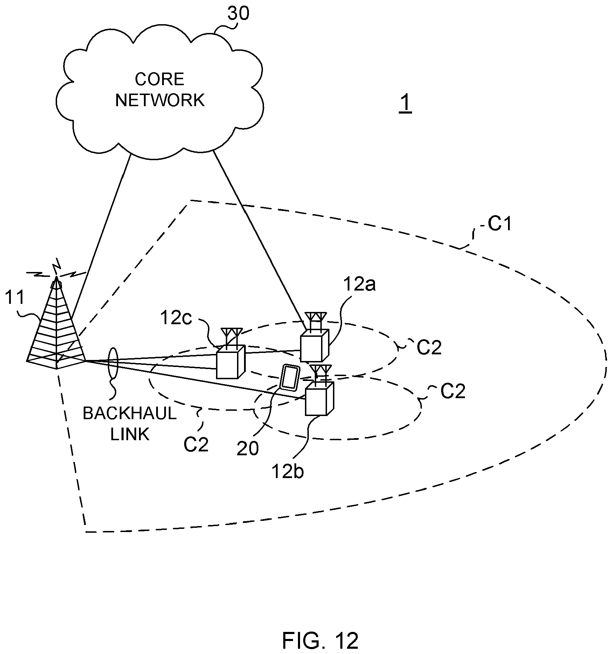

Fig. 12 is a diagram illustrating an example of a schematic configuration of a radio communication system according to one embodiment. A radio communication system 1 may be a system that implements communication using long term evolution (LTE), 5th generation mobile communication system New Radio (5G NR), and the like drafted as the specification by third generation partnership project (3GPP).

Furthermore, the radio communication system 1 may support dual connectivity (multi-RAT dual connectivity (MR-DC)) between a plurality of radio access technologies (RATs). The MR-DC may include dual connectivity between LTE (evolved universal terrestrial radio access (E-UTRA)) and NR (E-UTRA-NR dual connectivity (EN-DC)), dual connectivity between NR and LTE (NR-E-UTRA dual connectivity (NE-DC)), and the like.

In the EN-DC, an LTE (E-UTRA) base station (eNB) is a master node (MN), and an NR base station (gNB) is a secondary node (SN). In the NE-DC, an NR base station (gNB) is the MN, and an LTE (E-UTRA) base station (eNB) is the SN.

The radio communication system 1 may support dual connectivity between a plurality of base stations in the same RAT (for example, dual connectivity in which both the MN and the SN are NR base stations (gNB) (NR-NR dual connectivity (NN-DC)).

The radio communication system 1 may include a base station 11 that forms a macro cell C1 with a relatively wide coverage, and base stations 12 (12a to 12c) that are disposed within the macro cell C1 and that form small cells C2 narrower than the macro cell C1. A user terminal 20 may be positioned in at least one cell. The arrangement, number, and the like of cells and the user terminals 20 are not limited to the aspects illustrated in the drawings. Hereinafter, the base stations 11 and 12 will be collectively referred to as "base stations 10" when the base stations 11 and 12 are not distinguished from each other.

The user terminal 20 may be connected to at least one of the plurality of base stations 10. The user terminal 20 may use at least one of carrier aggregation (CA) using a plurality of component carriers (CC) and dual connectivity (DC).

Each CC may be included in at least one of a frequency range 1 (FR1) or a second frequency range 2 (FR2). The macro cell C1 may be included in FR1, and the small cell C2 may be included in FR2. For example, FR1 may be a frequency range of 6 GHz or less (sub-6 GHz), and FR2 may be a frequency range higher than 24 GHz (above-24 GHz). Note that the frequency bands, definitions, and the like of the FR1 and FR2 are not limited thereto, and, for example, the FR1 may correspond to a frequency band higher than the FR2.

Furthermore, the user terminal 20 may perform communication in each CC using at least one of time division duplex (TDD) or frequency division duplex (FDD).

The plurality of base stations 10 may be connected by wire (e.g., an optical fiber or an X2 interface in compliance with common public radio interface (CPRI)) or wirelessly (e.g., NR communication). For example, when NR communication is used as a backhaul between the base stations 11 and 12, the base station 11 corresponding to a higher-level station may be referred to as an integrated access backhaul (IAB) donor, and the base station 12 corresponding to a relay station (relay) may be referred to as an IAB node.

The base station 10 may be connected to a core network 30 via another base station 10 or directly. The core network 30 may include, for example, at least one of an evolved packet core (EPC), a 5G core network (5GCN), or a next generation core (NGC).

The user terminal 20 may a terminal that corresponds to at least one of communication methods such as LTE, LTE-A, and 5G.

In the radio communication system 1, a radio access method based on orthogonal frequency division multiplexing (OFDM) may be used. For example, in at least one of downlink (DL) or uplink (UL), cyclic prefix OFDM (CP-OFDM), discrete Fourier transform spread OFDM (DFT-s-OFDM), orthogonal frequency division multiple access (OFDMA), single carrier frequency division multiple access (SC-FDMA), and the like may be used.

The radio access method may be referred to as a waveform. Note that in the radio communication system 1, another radio access method (for example, another single carrier transmission method or another multicarrier transmission method) may be used as the UL and DL radio access method.

In the radio communication system 1, as a downlink channel, a physical downlink shared channel (PDSCH), a physical broadcast channel (PBCH), a physical downlink control channel (PDCCH), or the like shared by the user terminals 20 may be used.

Furthermore, in the radio communication system 1, as an uplink channel, a physical uplink shared channel (PUSCH), a physical uplink control channel (PUCCH), a physical random access channel (PRACH), or the like shared by the user terminals 20 may be used.

User data, higher layer control information, a system information block (SIB), and the like are transmitted on the PDSCH. The PUSCH may transmit the user data, higher layer control information, and the like. Furthermore, a master information block (MIB) may be transmitted on the PBCH.

Lower layer control information may be transmitted on the PDCCH. The lower layer control information may include, for example, downlink control information (DCI) including scheduling information of at least one of the PDSCH or the PUSCH.

Note that the DCI that schedules the PDSCH may be referred to as DL assignment, DL DCI, or the like, and the DCI that schedules PUSCH may be referred to as UL grant, UL DCI, or the like. Note that the PDSCH may be replaced with DL data, and the PUSCH may be replaced with UL data.

For detection of the PDCCH, a control resource set (CORESET) and a search space may be used. The CORESET corresponds to a resource that searches for DCI. The search space corresponds to a search area and a search method for PDCCH candidates. One CORESET may be associated with one or more search spaces. The UE may monitor the CORESET associated with a certain search space based on search space configuration.

One search space may correspond to a PDCCH candidate corresponding to one or more aggregation levels. One or more search spaces may be referred to as a search space set. Note that "search space" and "search space set", "search space configuration" and "search space set configuration", and "CORESET" and "CORESET configuration", and the like in the present disclosure may be replaced with each other.

Uplink control information (UCI) including at least one of channel state information (CSI), delivery acknowledgement information (which may be referred to as, for example, hybrid automatic repeat request acknowledgement (HARQ-ACK), ACK/NACK, or the like), or scheduling request (SR) may be transmitted on the PUCCH. A random access preamble for establishing connection with a cell may be transmitted on the PRACH.

Note that in the present disclosure, downlink, uplink, and the like may be expressed without "link". Various channels may be expressed without adding "physical" at the beginning thereof.

In the radio communication system 1, a synchronization signal (SS), a downlink reference signal (DL-RS), and the like may be transmitted. In the radio communication system 1, a cell-specific reference signal (CRS), a channel state information reference signal (CSI-RS), a demodulation reference signal (DMRS), a positioning reference signal (PRS), a phase tracking reference signal (PTRS), or the like may be transmitted as the DL-RS.

The synchronization signal may be, for example, at least one of a primary synchronization signal (PSS) or a secondary synchronization signal (SSS). A signal block including the SS (PSS or SSS) and the PBCH (and the DMRS for the PBCH) may be referred to as an SS/PBCH block, an SS block (SSB), or the like. Note that, the SS, the SSB, or the like may also be referred to as a reference signal.

Furthermore, in the radio communication system 1, a measurement reference signal (sounding reference signal (SRS)), a demodulation reference signal (DMRS), or the like may be transmitted as an uplink reference signal (UL-RS). Note that, DMRSs may be referred to as "user terminal-specific reference signals (UE-specific Reference Signals)."

### (Base Station)

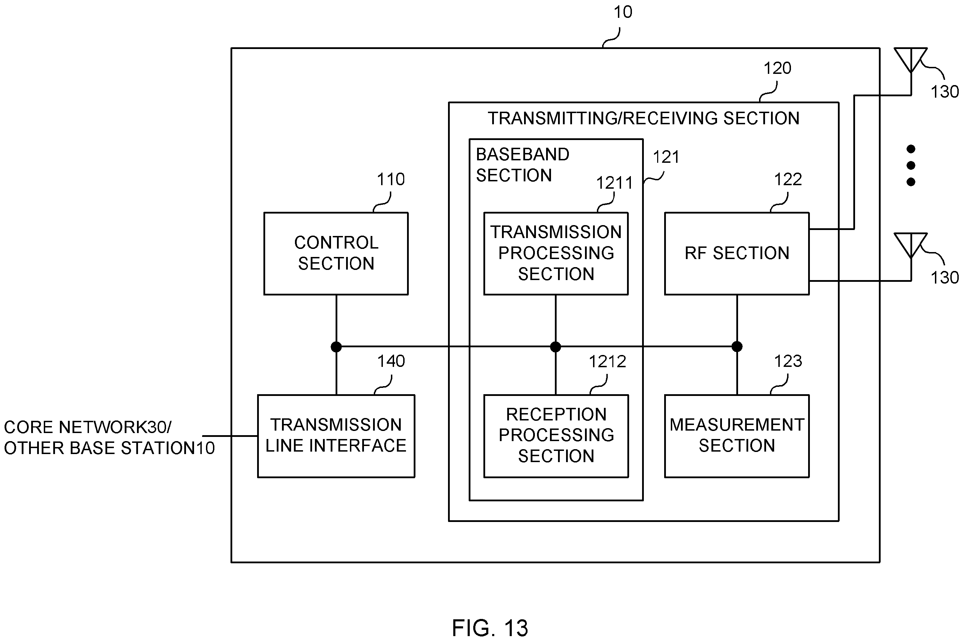

Fig. 13 is a diagram illustrating an example of a configuration of a base station according to one embodiment. The base station 10 includes a control section 110, a transmission/reception section 120, a transmission/reception antenna 130, and a transmission line interface 140. Note that one or more control sections 110, one or more transmission/reception sections 120, one or more transmission/reception antennas 130, and one or more transmission line interfaces 140 may be included.

Note that this example mainly describes a functional block which is a characteristic part of the present embodiment, and it may be assumed that the base station 10 also has another functional block necessary for radio communication. A part of processing of each section described below may be omitted.

The control section 110 controls the entire base station 10. The control section 110 can be implemented by a controller, a control circuit, and the like that are described based on common recognition in the technical field related to the present disclosure.

The control section 110 may control signal generation, scheduling (for example, resource allocation or mapping), and the like. The control section 110 may control transmission/reception, measurement, and the like using the transmission/reception section 120, the transmission/reception antenna 130, and the transmission line interface 140. The control section 110 may generate data to be transmitted as a signal, control information, a sequence, and the like, and may forward the data, the control information, the sequence, and the like to the transmission/reception section 120. The control section 110 may perform call processing (such as configuration or releasing) of a communication channel, management of the state of the base station 10, and management of a radio resource.

The transmission/reception section 120 may include a baseband section 121, a radio frequency (RF) section 122, and a measurement section 123. The baseband section 121 may include a transmission processing section 1211 and a reception processing section 1212. The transmission/reception section 120 can include a transmission section/reception section, an RF circuit, a baseband circuit, a filter, a phase shifter, a measurement circuit, a transmission/reception circuit, and the like that are described on the basis of common recognition in the technical field related to the present disclosure.

The transmission/reception section 120 may be configured as an integrated transmission/reception section, or may be configured by a transmission section and a reception section. The transmission section may include the transmission processing section 1211 and the RF section 122. The reception section may be implemented by the reception processing section 1212, the RF section 122, and the measurement section 123.

The transmission/reception antennas 130 can be implemented by antennas described based on common recognition in the technical field related to the present disclosure, for example, an array antenna.

The transmission/reception section 120 may transmit the above-described downlink channel, synchronization signal, downlink reference signal, and the like. The transmission/reception section 120 may receive the above-described uplink channel, uplink reference signal, and the like.

The transmission/reception section 120 may form at least one of a transmission beam or a reception beam by using digital beam forming (for example, precoding), analog beam forming (for example, phase rotation), and the like.

The transmission/reception section 120 (transmission processing section 1211) may perform packet data convergence protocol (PDCP) layer processing, radio link control (RLC) layer processing (for example, RLC retransmission control), medium access control (MAC) layer processing (for example, HARQ retransmission control), and the like on, for example, data, control information, and the like acquired from the control section 110, to generate a bit string to be transmitted.

The transmission/reception section 120 (transmission processing section 1211) may perform transmission processing such as channel encoding (which may include error correction encoding), modulation, mapping, filtering processing, discrete Fourier transform (DFT) processing (if necessary), inverse fast Fourier transform (IFFT) processing, precoding, or digital-analog conversion on the bit string to be transmitted, to output a baseband signal.

The transmission/reception section 120 (RF section 122) may perform modulation to a radio frequency band, filtering processing, amplification, and the like on the baseband signal, and may transmit a signal in the radio frequency band via the transmission/reception antenna 130.

Meanwhile, the transmission/reception section 120 (RF section 122) may perform amplification, filtering processing, demodulation to a baseband signal, and the like on the signal in the radio frequency band received by the transmission/reception antenna 130.

The transmission/reception section 120 (reception processing section 1212) may apply reception processing such as analog-digital conversion, fast Fourier transform (FFT) processing, inverse discrete Fourier transform (IDFT) processing (if necessary), filtering processing, demapping, demodulation, decoding (which may include error correction decoding), MAC layer processing, RLC layer processing, or PDCP layer processing on the acquired baseband signal, to acquire user data and the like.

The transmission/reception section 120 (measurement section 123) may perform measurement on the received signal. For example, the measurement section 123 may perform radio resource management (RRM), channel state information (CSI) measurement, and the like based on the received signal. The measurement section 123 may measure received power (for example, reference signal received power (RSRP)), received quality (for example, reference signal received quality (RSRQ), a signal to interference plus noise ratio (SINR), a signal to noise ratio (SNR)), signal strength (for example, received signal strength indicator (RSSI)), propagation path information (for example, CSI), and the like. The measurement result may be output to the control section 110.

The transmission line interface 140 may transmit/receive a signal (backhaul signaling) to and from an apparatus included in the core network 30, another base stations 10, and the like, and may acquire, transmit, and the like user data (user plane data), control plane data, and the like for the user terminal 20.

Note that the transmission section and the reception section of the base station 10 in the present disclosure may include at least one of the transmission/reception section 120, the transmission/reception antenna 130, or the transmission line interface 140.

The transmission/reception section 120 may receive at least one of the first report not including the information regarding the measurement result of the non-serving cell and the second report including the information regarding the measurement result of the non-serving cell.

The control section 110 may perform control to receive the first report not including the information on the measurement result of the non-serving cell and the second report including the information on the measurement result of the non-serving cell by the uplink control information having the same size.

### (User Terminal)

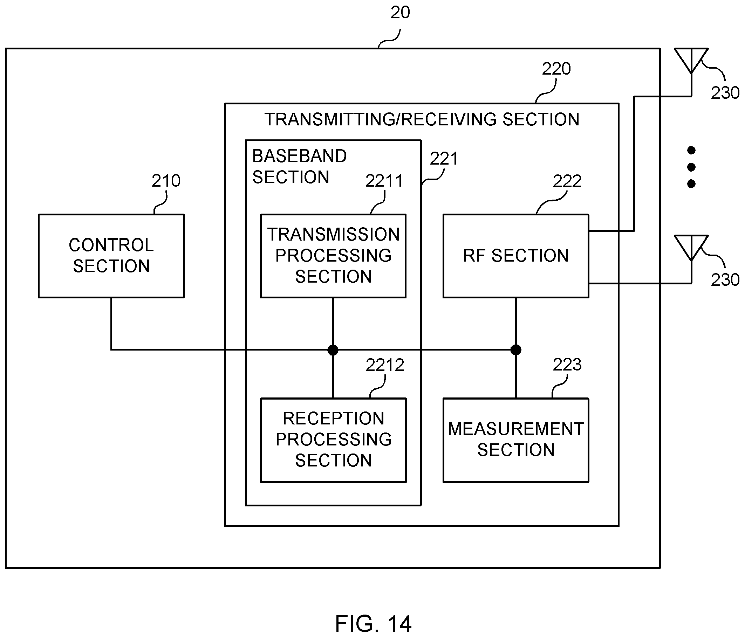

Fig. 14 is a diagram illustrating an example of a configuration of a user terminal according to one embodiment. The user terminal 20 includes a control section 210, a transmission/reception section 220, and a transmission/reception antenna 230. Note that one or more of the control sections 210, one or more of the transmission/reception sections 220, and one or more of the transmission/reception antennas 230 may be included.

Note that, although this example mainly describes functional blocks of a characteristic part of the present embodiment, it may be assumed that the user terminal 20 includes other functional blocks that are necessary for radio communication as well. A part of processing of each section described below may be omitted.

The control section 210 controls the entire user terminal 20. The control section 210 can include a controller, a control circuit, and the like that are described on the basis of common recognition in the technical field related to the present disclosure.

The control section 210 may control signal generation, mapping, and the like. The control section 210 may control transmission/reception, measurement, and the like using the transmission/reception section 220 and the transmission/reception antenna 230. The control section 210 may generate data, control information, a sequence, and the like to be transmitted as signals, and may forward the data, control information, sequence, and the like to the transmission/reception section 220.

The transmission/reception section 220 may include a baseband section 221, an RF section 222, and a measurement section 223. The baseband section 221 may include a transmission processing section 2211 and a reception processing section 2212. The transmission/reception section 220 can be implemented by a transmitter/receiver, an RF circuit, a baseband circuit, a filter, a phase shifter, a measurement circuit, a transmission/reception circuit, and the like that are described based on common recognition in the technical field related to the present disclosure.

The transmission/reception section 220 may be formed as an integrated transmission/reception section, or may include a transmission section and a reception section. The transmission section may include the transmission processing section 2211 and the RF section 222. The reception section may include the reception processing section 2212, the RF section 222, and the measurement section 223.

The transmission/reception antenna 230 can include an antenna described on the basis of common recognition in the technical field related to the present disclosure, for example, an array antenna.

The transmission/reception section 220 may receive the above-described downlink channel, synchronization signal, downlink reference signal, and the like. The transmission/reception section 220 may transmit the above-described uplink channel, uplink reference signal, and the like.

The transmission/reception section 220 may form at least one of a transmission beam or a reception beam by using digital beam forming (for example, precoding), analog beam forming (for example, phase rotation), and the like.

The transmission/reception section 220 (transmission processing section 2211) may perform PDCP layer processing, RLC layer processing (for example, RLC retransmission control), MAC layer processing (for example, HARQ retransmission control), and the like on, for example, data, control information, and the like acquired from the control section 210, to generate a bit string to be transmitted.

The transmission/reception section 220 (transmission processing section 2211) may perform transmission processing such as channel encoding (which may include error correction encoding), modulation, mapping, filtering processing, DFT processing (if necessary), IFFT processing, precoding, or digital-analog conversion on the bit string to be transmitted, to output a baseband signal.

Note that whether or not to apply DFT processing may be determined based on configuration of transform precoding. In a case where transform precoding is enabled for a certain channel (e.g., PUSCH), the transmission/reception section 220 (transmission processing section 2211) may perform DFT processing as the transmission processing in order to transmit the channel using a DFT-s-OFDM waveform. In a case where it is not the case, DFT processing need not be performed as the transmission processing.

The transmission/reception section 220 (RF section 222) may perform modulation to a radio frequency range, filtering processing, amplification, and the like on the baseband signal, to transmit a signal in the radio frequency range via the transmission/reception antenna 230.

Meanwhile, the transmission/reception section 220 (RF section 222) may perform amplification, filtering processing, demodulation to a baseband signal, and the like on the signal in the radio frequency range received by the transmission/reception antenna 230.

The transmission/reception section 220 (reception processing section 2212) may apply reception processing such as analog-digital conversion, FFT processing, IDFT processing (if necessary), filtering processing, demapping, demodulation, decoding (which may include error correction decoding), MAC layer processing, RLC layer processing, or PDCP layer processing on the acquired baseband signal, to acquire user data and the like.

The transmission/reception section 220 (measurement section 223) may perform measurement on the received signal. For example, the measurement section 223 may perform RRM measurement, CSI measurement, and the like based on the received signal. The measurement section 223 may measure received power (for example, RSRP), received quality (for example, RSRQ, SINR, or SNR), signal strength (for example, RSSI), propagation path information (for example, CSI), and the like. The measurement result may be output to the control section 210.

Note that the transmission section and the reception section of the user terminal 20 in the present disclosure may include at least one of the transmission/reception section 220 or the transmission/reception antenna 230.

The transmission/reception section 220 may transmit at least one of the first report not including the information regarding the measurement result of the non-serving cell and the second report including the information regarding the measurement result of the non-serving cell.

The control section 210 may perform control to transmit the first report not including the information related to the measurement result of the non-serving cell and the second report including the information related to the measurement result of the non-serving cell using the uplink control information having the same size.

The control section 210 may control to perform the second report in a case where a certain event occurs.

The control section 210 may perform control such that the first uplink control information and the second uplink control information include information on whether or not a certain event occurs.

In the first report and the second report, at least one of the number of bits of the information about the received power, the number of bits of the information about the reference signal resource, and the number of bits of the information about the cell may be set separately (for example, differently).

### (Hardware Configuration)

Note that the block diagrams that have been used to describe the above embodiments illustrate blocks in functional units. These functional blocks (components) may be implemented in arbitrary combinations of at least one of hardware or software. Further, the method for implementing each functional block is not particularly limited. That is, each functional block may be implemented by a single apparatus physically or logically aggregated, or may be implemented by directly or indirectly connecting two or more physically or logically separate apparatuses (in a wired manner, a radio manner, or the like, for example) and using these apparatuses. The functional block may be realized by combining the one apparatus or the plurality of apparatuses with software.

Here, the function includes, but is not limited to, determining, judging, calculating, computing, processing, deriving, investigating, searching, ascertaining, receiving, transmitting, outputting, accessing, solving, selecting, choosing, establishing, comparing, assuming, expecting, regarding, broadcasting, notifying, communicating, forwarding, configuring, reconfiguring, allocating, mapping, assigning, and the like. For example, a functional block (component) that has a transmission function may be referred to as a transmission section (transmitting unit), a transmitter, and the like. In any case, as described above, the implementation method is not particularly limited.

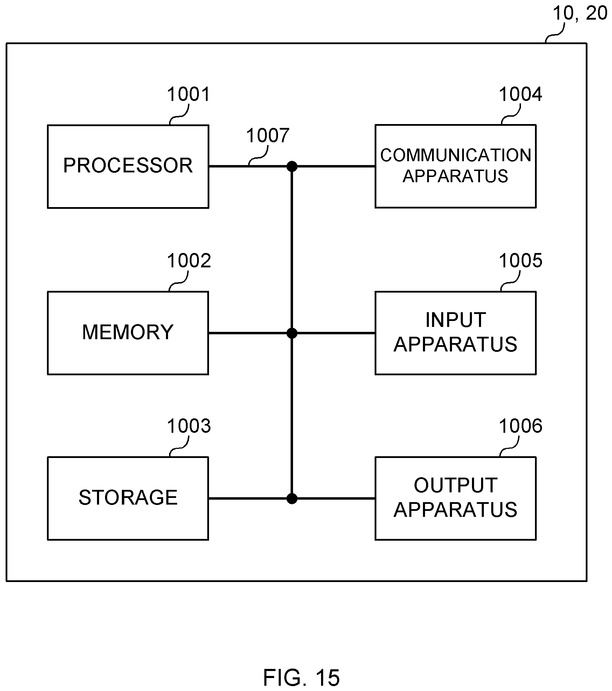

For example, the base station, the user terminal, and the like according to one embodiment of the present disclosure may function as a computer that executes the processing of the radio communication method of the present disclosure. Fig. 15 is a diagram illustrating an example of a hardware configuration of the base station and the user terminal according to one embodiment. Physically, the above-described base station 10 and user terminal 20 may be formed as a computer apparatus that includes a processor 1001, a memory 1002, a storage 1003, a communication apparatus 1004, an input apparatus 1005, an output apparatus 1006, a bus 1007, and the like.

Note that in the present disclosure, the terms such as an apparatus, a circuit, a device, a section, or a unit can be replaced with each other. The hardware configuration of the base station 10 and the user terminal 20 may be designed to include one or more of the apparatuses illustrated in the drawings, or may be designed not to include some apparatuses.

For example, although only one processor 1001 is illustrated, a plurality of processors may be provided. Furthermore, the processing may be executed by one processor, or the processing may be executed by two or more processors simultaneously or sequentially, or using other methods. Note that the processor 1001 may be implemented with one or more chips.

Each function of the base station 10 and the user terminal 20 is implemented by certain software (program) being read on hardware such as the processor 1001 and the memory 1002, by which the processor 1001 performs operations, controlling communication via the communication apparatus 1004, and controlling at least one of reading or writing of data at the memory 1002 and the storage 1003.

The processor 1001 may control the whole computer by, for example, running an operating system. The processor 1001 may be implemented by a central processing unit (CPU) including an interface with peripheral equipment, a control apparatus, an operation apparatus, a register, and the like. For example, at least a part of the above-described control section 110 (210), transmission/reception section 120 (220), and the like may be implemented by the processor 1001.

The processor 1001 reads programs (program codes), software modules, data, etc. from at least one of the storage 1003 or the communication apparatus 1004 into the memory 1002, and performs various types of processing according to these. As the program, a program that causes a computer to execute at least a part of the operation described in the above-described embodiment is used. For example, the control section 110 (210) may be implemented by control programs that are stored in the memory 1002 and that operate on the processor 1001, and other functional blocks may be implemented likewise.

The memory 1002 is a computer-readable recording medium, and may include, for example, at least one of a read only memory (ROM), an erasable programmable ROM (EPROM), an electrically EPROM (EEPROM), a random access memory (RAM), or other appropriate storage media. The memory 1002 may be referred to as a register, a cache, a main memory (primary storage apparatus), and the like. The memory 1002 can store programs (program codes), software modules, etc. that are executable for implementing the radio communication method according to one embodiment of the present disclosure.

The storage 1003 is a computer-readable recording medium, and may include, for example, at least one of a flexible disk, a floppy (registered trademark) disk, a magneto-optical disk (for example, a compact disc ROM (CD-ROM) and the like), a digital versatile disk, a Blu-ray (registered trademark) disk), a removable disk, a hard disk drive, a smart card, a flash memory device (for example, a card, a stick, or a key drive), a magnetic stripe, a database, a server, or other appropriate storage media. The storage 1003 may be referred to as "secondary storage apparatus."

The communication apparatus 1004 is hardware (transmission/reception device) for performing inter-computer communication via at least one of a wired network or a wireless network, and is referred to as, for example, a network device, a network controller, a network card, a communication module, and the like. The communication apparatus 1004 may include a high frequency switch, a duplexer, a filter, a frequency synthesizer, and the like in order to implement, for example, at least one of frequency division duplex (FDD) or time division duplex (TDD). For example, the transmission/reception section 120 (220), the transmission/reception antenna 130 (230), and the like described above may be implemented by the communication apparatus 1004. The transmission/reception section 120 (220) may be implemented by being physically or logically separated into the transmission section 120a (220a) and the reception section 120b (220b).

The input apparatus 1005 is an input device for receiving input from the outside (for example, a keyboard, a mouse, a microphone, a switch, a button, a sensor and so on). The output apparatus 1006 is an output device that performs output to the outside (for example, a display, a speaker, a light emitting diode (LED) lamp, or the like). Note that the input apparatus 1005 and the output apparatus 1006 may be provided in an integrated structure (for example, a touch panel).

Furthermore, these pieces of apparatus (these apparatus), including the processor 1001, the memory 1002 and so on are connected by the bus 1007 so as to communicate information. The bus 1007 may be formed with a single bus, or may be formed with buses that vary between pieces of apparatus (between apparatus).

Furthermore, the base station 10 and the user terminal 20 may include hardware such as a microprocessor, a digital signal processor (DSP), an application specific integrated circuit (ASIC), a programmable logic device (PLD), or a field programmable gate array (FPGA), and some or all of the functional blocks may be implemented by using the hardware. For example, the processor 1001 may be implemented with at least one of these pieces of hardware (at least one of these hardware).

### (Variations)

Note that terms described in the present disclosure and terms necessary for understanding the present disclosure may be replaced with terms that have the same or similar meanings. For example, a channel, a symbol, and a signal (signal or signaling) may be replaced with each other. Further, the signal may be a message. The reference signal can be abbreviated as an RS, and may be referred to as a pilot, a pilot signal, and the like, depending on which standard applies. Further, a component carrier (CC) may be referred to as a cell, a frequency carrier, a carrier frequency, and the like.

A radio frame may be comprised of one or more periods (frames) in the time domain. Each of the one or more periods (frames) included in the radio frame may be referred to as a subframe. Further, the subframe may include one or more slots in the time domain. The subframe may be a fixed time duration (for example, 1 ms) that is not dependent on numerology.

Here, the numerology may be a communication parameter used for at least one of transmission or reception of a certain signal or channel. For example, the numerology may indicate at least one of subcarrier spacing (SCS), a bandwidth, a symbol length, a cyclic prefix length, a transmission time interval (TTI), the number of symbols per TTI, a radio frame configuration, specific filtering processing performed by a transceiver in the frequency domain, or specific windowing processing performed by a transceiver in the time domain.

The slot may include one or more symbols in the time domain (orthogonal frequency division multiplexing (OFDM) symbols, single carrier frequency division multiple access (SC-FDMA) symbols, and the like). Also, a slot may be a time unit based on numerology.

The slot may include a plurality of mini slots. Each mini slot may include one or more symbols in the time domain. Further, the mini slot may be referred to as a subslot. Each mini slot may include fewer symbols than the slot. A PDSCH (or PUSCH) transmitted in a time unit larger than the mini slot may be referred to as "PDSCH (PUSCH) mapping type A". A PDSCH (or a PUSCH) transmitted using a mini slot may be referred to as PDSCH (PUSCH) mapping type B.

A radio frame, a subframe, a slot, a mini slot and a symbol all represent the time unit in signal communication. The radio frame, the subframe, the slot, the mini slot, and the symbol may be called by other applicable names, respectively. Note that time units such as a frame, a subframe, a slot, a mini slot, and a symbol in the present disclosure may be replaced with each other.

For example, one subframe may be referred to as TTI, a plurality of consecutive subframes may be referred to as TTI, or one slot or one mini slot may be referred to as TTI. That is, at least one of the subframe or the TTI may be a subframe (1 ms) in the existing LTE, may be a period shorter than 1 ms (for example, one to thirteen symbols), or may be a period longer than 1 ms. Note that the unit to represent the TTI may be referred to as a "slot", a "mini slot" and so on, instead of a "subframe."

Here, a TTI refers to the minimum time unit of scheduling in radio communication, for example. For example, in the LTE system, a base station performs scheduling to allocate radio resources (a frequency bandwidth, transmission power, and the like that can be used in each user terminal) to each user terminal in TTI units. Note that the definition of TTIs is not limited to this.

The TTI may be a transmission time unit of a channel-coded data packet (transport block), a code block, a codeword, etc. or may be a processing unit of scheduling, link adaptation, etc. When the TTI is given, a time interval (e.g., the number of symbols) to which a transport block, a code block, a codeword, or the like is actually mapped may be shorter than the TTI.

Note that, when one slot or one mini slot is referred to as a "TTI", one or more TTIs (that is, one or multiple slots or one or more mini slots) may be the minimum time unit of scheduling. Also, the number of slots (the number of mini slots) to constitute this minimum time unit of scheduling may be controlled.

A TTI having a time duration of 1 ms may be referred to as a usual TTI (TTI in 3GPP Rel. 8 to 12), a normal TTI, a long TTI, a usual subframe, a normal subframe, a long subframe, a slot, or the like. A TTI that is shorter than the usual TTI may be referred to as a shortened TTI, a short TTI, a partial TTI (or fractional TTI), a shortened subframe, a short subframe, a mini slot, a subslot, a slot, or the like.

Note that a long TTI (for example, a normal TTI, a subframe, etc.) may be replaced with a TTI having a time duration exceeding 1 ms, and a short TTI (for example, a shortened TTI) may be replaced with a TTI having a TTI duration less than the TTI duration of a long TTI and not less than 1 ms.

A resource block (RB) is the unit of resource allocation in the time domain and the frequency domain, and may include one or more contiguous subcarriers in the frequency domain. The number of subcarriers included in the RB may be the same regardless of the numerology, and may be twelve, for example. The number of subcarriers included in an RB may be determined based on a numerology.

Also, an RB may include one or more symbols in the time domain, and may be one slot, one mini slot, one subframe or one TTI in length. One TTI, one subframe, etc. may each be comprised of one or more resource blocks.

Note that one or more RBs may be referred to as a physical resource block (PRB), a subcarrier group (SCG), a resource element group (REG), a PRB pair, an RB pair, and the like.

Furthermore, a resource block may include one or more resource elements (REs). For example, one RE may be a radio resource field of one subcarrier and one symbol.

A bandwidth part (BWP) (which may be referred to as a partial bandwidth or the like) may represent a subset of contiguous common resource blocks (RBs) for a certain numerology in a certain carrier. Here, the common RB may be specified by the index of the RB based on a common reference point of the carrier. PRBs may be defined in a BWP and numbered within the BWP.

The BWP may include a BWP for UL (UL BWP) and a BWP for DL (DL BWP). For the UE, one or more BWPs may be configured within one carrier.

At least one of the configured BWPs may be active, and the UE does not have to expect transmission/reception of a certain signal/channel outside the active BWP. Note that "cell", "carrier", etc. in the present disclosure may be replaced with "BWP".

Note that the structures of radio frames, subframes, slots, mini slots, symbols and so on described above are merely examples. For example, configurations such as the number of subframes included in a radio frame, the number of slots per subframe or radio frame, the number of mini slots included in a slot, the number of symbols and RBs included in a slot or a mini slot, the number of subcarriers included in an RB, the number of symbols in a TTI, the symbol length, the length of cyclic prefix (CP), and the like can be variously changed.

The information, parameters, etc. described in the present disclosure may be represented using absolute values, or may be represented using relative values with respect to certain values, or may be represented using other corresponding information. For example, a radio resource may be specified by a certain index.

The names used for parameters etc. in the present disclosure are in no respect limiting. Further, any mathematical expression or the like that uses these parameters may differ from those explicitly disclosed in the present disclosure. Since various channels (PUCCH, PDCCH, and the like) and information elements can be identified by any suitable names, various names allocated to these various channels and information elements are not restrictive names in any respect.

The information, signals, etc. described in the present disclosure may be represented using any of a variety of different technologies. For example, data, instructions, commands, information, signals, bits, symbols and chips, all of which may be referenced throughout the herein-contained description, may be represented by voltages, currents, electromagnetic waves, magnetic fields or particles, optical fields or photons, or any combination of these.

Information, signals, etc. can be output in at least one of a direction from a higher layer to a lower layer or a direction from a lower layer to a higher layer. Information, signals and so on may be input and output via a plurality of network nodes.

The information, signals and so on that are input and/or output may be stored in a specific location (for example, in a memory), or may be managed in a control table. The information, signals, and the like to be input and output can be overwritten, updated, or appended. The output information, signals, and the like may be deleted. The information, signals and so on that are input may be transmitted to other pieces of apparatus (other apparatus).

Notification of information may be performed not only by using the aspects/embodiments described in the present disclosure but also using another method. For example, the notification of information in the present disclosure may be performed by using physical layer signaling (for example, downlink control information (DCI) or uplink control information (UCI)), higher layer signaling (for example, radio resource control (RRC) signaling, broadcast information (master information block (MIB)), system information block (SIB), or the like), or medium access control (MAC) signaling), another signal, or a combination thereof.

Note that the physical layer signaling may be referred to as Layer 1/Layer 2 (L1/L2) control information (L1/L2 control signal), L1 control information (L1 control signal), and the like. Further, the RRC signaling may be referred to as an RRC message, and may be, for example, an RRC connection setup message, an RRC connection reconfiguration message, and the like. Further, notification of the MAC signaling may be performed using, for example, an MAC control element (CE).

Also, reporting of certain information (for example, reporting of information to the effect that "X holds") does not necessarily have to be sent explicitly, and can be sent implicitly (for example, by not reporting this piece of information, by reporting another piece of information, and so on).

Decisions may be made in values represented by one bit (0 or 1), may be made in Boolean values that represent true or false, or may be made by comparing numerical values (for example, comparison against a certain value).

Software, whether referred to as "software", "firmware", "middleware", "microcode" or "hardware description language", or called by other names, should be interpreted broadly, to mean instructions, instruction sets, code, code segments, program codes, programs, subprograms, software modules, applications, software applications, software packages, routines, subroutines, objects, executable files, execution threads, procedures, functions and so on.

Also, software, commands, information and so on may be transmitted and received via communication media. For example, when software is transmitted from a website, a server, or another remote source by using at least one of a wired technology (coaxial cable, optical fiber cable, twisted pair, digital subscriber line (DSL), or the like) or a wireless technology (infrared rays, microwaves, and the like), at least one of the wired technology or the wireless technology is included within the definition of a transmission medium.

The terms "system" and "network" used in the present disclosure may be used interchangeably. The "network" may mean an apparatus (for example, a base station) included in the network.

In the present disclosure, terms such as "precoding", "precoder", "weight (precoding weight)", "quasi-co-location (QCL)", "transmission configuration indication state (TCI state)", "spatial relation", "spatial domain filter", "transmit power", "phase rotation", "antenna port", "antenna port group", "layer", "number of layers", "rank", "resource", "resource set", "resource group", "beam", "beam width", "beam angle", "antenna", "antenna element", and "panel" can be used interchangeably.

In the present disclosure, terms such as "base station (BS)", "radio base station", "fixed station", "NodeB", "eNodeB (eNB)", "gNodeB (gNB)", "access point", "transmission point (TP)", "reception point (RP)", "transmission/reception point (TRP)", "panel", "cell", "sector", "cell group", "carrier", and "component carrier", can be used interchangeably. The base station may be referred to as a term such as a macro cell, a small cell, a femto cell, or a pico cell.

The base station can accommodate one or more (for example, three) cells. In a case where the base station accommodates a plurality of cells, the entire coverage area of the base station can be partitioned into a plurality of smaller areas, and each smaller area can provide communication services through a base station subsystem (for example, small base station for indoors (remote radio head (RRH))). The term "cell" or "sector" refers to a part or the whole of a coverage area of at least one of the base station or the base station subsystem that performs a communication service in this coverage.

In the present disclosure, the terms such as "mobile station (MS)", "user terminal", "user equipment (UE)", and "terminal" can be used interchangeably.

The mobile station may be referred to as a subscriber station, mobile unit, subscriber station, wireless unit, remote unit, mobile device, wireless device, wireless communication device, remote device, mobile subscriber station, access terminal, mobile terminal, wireless terminal, remote terminal, handset, user agent, mobile client, client, or some other suitable terms.

At least one of the base station or the mobile station may be called as a transmitting apparatus, a receiving apparatus, a radio communication apparatus, and the like. Note that at least one of the base station or the mobile station may be a device mounted on a moving object, a moving object itself, and the like. The moving object may be a transportation (for example, a car, an airplane, or the like), an unmanned moving object (for example, a drone, an autonomous car, or the like), or a (manned or unmanned) robot. Note that at least one of the base station or the mobile station also includes an apparatus that does not necessarily move during a communication operation. For example, at least one of the base station or the mobile station may be an Internet of Things (IoT) device such as a sensor.

Further, the base station in the present disclosure may be replaced with the user terminal. For example, each aspect/embodiment of the present disclosure may be applied to a configuration in which communication between the base station and the user terminal is replaced with communication among a plurality of user terminals (which may be referred to as, for example, device-to-device (D2D), vehicle-to-everything (V2X), and the like). In this case, the user terminal 20 may have the function of the above-described base station 10. Furthermore, words such as "uplink" and "downlink" may be replaced with words corresponding to terminal-to-terminal communication (for example, "side link"). For example, the uplink channel, the downlink channel, and the like may be read as a side link channel.

Likewise, a user terminal in the present disclosure may be replaced with a base station. In this case, the base station 10 may have the functions of the user terminal 20 described above.

In the present disclosure, an operation performed by the base station may be performed by an upper node thereof in some cases. In a network including one or more network nodes with base stations, it is clear that various operations performed for communication with a terminal can be performed by a base station, one or more network nodes (examples of which include but are not limited to mobility management entity (MME) and serving-gateway (S-GW)) other than the base station, or a combination thereof.

The aspects/embodiments illustrated in the present disclosure may be used individually or in combinations, which may be switched depending on the mode of implementation. Further, the order of processing procedures, sequences, flowcharts, and the like of the aspects/embodiments described in the present disclosure may be re-ordered as long as there is no inconsistency. For example, the methods described in the present disclosure have presented various step elements using an exemplary order, and are not limited to the presented specific order.

Each aspect/embodiment described in the present disclosure may be applied to a system using long term evolution (LTE), LTE-advanced (LTE-A), LTE-beyond (LTE-B), SUPER 3G, IMT-Advanced, 4th generation mobile communication system (4G), 5th generation mobile communication system (5G), 6th generation mobile communication system (6G), xth generation mobile communication system (xG) (x is, for example, an integer or decimal), future radio access (FRA), new radio access technology (RAT), new radio (NR), new radio access (NX), future generation radio access (FX), global system for mobile communications (GSM (registered trademark)), CDMA 2000, ultra mobile broadband (UMB), IEEE 802.11 (Wi-Fi (registered trademark)), IEEE 802.16 (WiMAX (registered trademark)), IEEE 802.20, Ultra-WideBand (UWB), Bluetooth (registered trademark), or another appropriate radio communication method, a next generation system expanded on the basis of these, and the like. Further, a plurality of systems may be combined and applied (for example, a combination of LTE or LTE-A and 5G, and the like).

The phrase "based on" as used in the present disclosure does not mean "based only on", unless otherwise specified. In other words, the phrase "based on" means both "based only on" and "based at least on."

The term "determining" as used in the present disclosure may include a wide variety of operations. For example, "determining" may be regarded as "determining" judging, calculating, computing, processing, deriving, investigating, looking up (or searching or inquiring) (for example, looking up in a table, database, or another data structure), ascertaining, and the like.

Furthermore, to "judge" and "determine" as used herein may be interpreted to mean making judgements and determinations related to receiving (for example, receiving information), transmitting (for example, transmitting information), inputting, outputting, accessing (for example, accessing data in a memory) and so on.

Furthermore, to "judge" and "determine" as used herein may be interpreted to mean making judgements and determinations related to resolving, selecting, choosing, establishing, comparing and so on. In other words, to "judge" and "determine" as used herein may be interpreted to mean making judgements and determinations related to some action.

Furthermore, "determining" may be replaced with "assuming", "expecting", "considering", or the like.

The "maximum transmission power" described in the present disclosure may mean a maximum value of transmission power, nominal UE maximum transmit power, or rated UE maximum transmit power.

The terms "connected" and "coupled" used in the present disclosure, or any variation of these terms mean all direct or indirect connections or coupling between two or more elements, and may include the presence of one or more intermediate elements between two elements that are "connected" or "coupled" to each other. The coupling or connection between the elements may be physical, logical, or a combination of these. For example, "connection" may be replaced with "access".

In the present disclosure, when two elements are connected together, it is conceivable that the two elements are "connected" or "coupled" to each other by using one or more electrical wires, cables, printed electrical connections, and the like, and, as some non-limiting and non-inclusive examples, by using electromagnetic energy having wavelengths in the radio frequency domain, microwave region, or optical (both visible and invisible) region, or the like.

In the present disclosure, the terms "A and B are different" may mean "A and B are different from each other". Note that the phrase may mean that "A and B are different from C". The terms such as "separate", "coupled", and the like may be interpreted similarly to "different".

When "include", "including", and variations of these are used in the present disclosure, these terms are intended to be inclusive similarly to the term "comprising". Moreover, the term "or" used in the present disclosure is intended to be not an exclusive-OR.

In the present disclosure, when articles are added by translation, for example, as "a", "an", and "the" in English, the present disclosure may include that nouns that follow these articles are plural.

In the above, the invention according to the present disclosure has been described in detail; however, it is obvious to those skilled in the art that the invention according to the present disclosure is not limited to the embodiments described in the present disclosure. The invention according to the present disclosure can be embodied with various corrections and in various modified aspects, without departing from the spirit and scope of the invention defined on the basis of the description of claims. Consequently, the description of the present disclosure is provided only for the purpose of explaining examples, and should by no means be construed to limit the invention according to the present disclosure in any way.

This application is based on Japanese Patent Application No. 2021-084588 filed on May 19, 2021. All the contents are included herein.

## Claims

1. A terminal comprising:
a control section that controls transmission of a first report not including information related to a measurement result of a non-serving cell and a second report including information related to a measurement result of the non-serving cell using uplink control information having a same size; and
a transmission section that transmits at least one of the first report and the second report.

2. The terminal according to claim 1, wherein the control section performs control to make the second report in a case where a certain event occurs.

3. The terminal according to claim 2, wherein the control section performs control to include information regarding whether or not the certain event occurs in the first uplink control information and the second uplink control information.

4. The terminal according to any one of claims 1 to 3, wherein at least one of a bit number of information related to received power, a bit number of information related to a reference signal resource, and a bit number of information related to a cell is different between the first report and the second report.

5. A radio communication method of a terminal, the method comprising:
controlling transmission of a first report not including information related to a measurement result of a non-serving cell and a second report including information related to a measurement result of the non-serving cell using uplink control information having a same size; and
transmitting at least one of the first report and the second report.

6. A base station comprising:
a control section that controls reception of a first report not including information related to a measurement result of a non-serving cell and a second report including information related to a measurement result of the non-serving cell using uplink control information having a same size; and
a reception section that receives at least one of the first report and the second report.
